(19) **Europäisches Patentamt**
**European Patent Office**
**Office européen des brevets**

(11) **EP 4 593 478 A1**

(12) **EUROPEAN PATENT APPLICATION**
published in accordance with Art. 153(4) EPC

(43) Date of publication:
**30.07.2025  Bulletin 2025/31**

(21) Application number: **23868512.7**

(22) Date of filing: **15.09.2023**

(51) International Patent Classification (IPC):
**H04W 56/00** (2009.01)     **H04W 72/23** (2023.01)
**H04W 72/04** (2023.01)     **H04W 74/08** (2024.01)

(52) Cooperative Patent Classification (CPC):
**H04W 56/00; H04W 72/04; H04W 72/23;**
**H04W 74/08**

(86) International application number:
**PCT/KR2023/013965**

(87) International publication number:
**WO 2024/063460 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.09.2022  KR 20220121088**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **YANG, Suckchel**
  **Seoul 06772 (KR)**
• **KIM, Hyungtae**
  **Seoul 06772 (KR)**
• **KANG, Jiwon**
  **Seoul 06772 (KR)**

(74) Representative: **Plasseraud IP**
**104 Rue de Richelieu**
**CS92104**
**75080 Paris Cedex 02 (FR)**

(54) **METHOD FOR TIME ALIGNMENT IN WIRELESS COMMUNICATION SYSTEM, AND DEVICE THEREFOR**

(57)     A method performed by means of a terminal, according to one embodiment of the present disclosure, comprises the steps of: receiving configuration information related to a timing advance group (TAG) from a base station; performing an operation related to the mainte- nance of uplink timing alignment on the basis of a time alignment timer; and transmitting, to the base station, an uplink channel/signal on the basis of uplink transmission timing for the TAG.

[FIG. 3]

EP 4 593 478 A1

**Description**

[TECHNICAL FIELD]

The present disclosure relates to a method for time alignment in a wireless communication system, and a device therefor.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CCBWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed.

[DISCLOSURE]

[TECHNICAL PROBLEM]

When time alignment timers related to a plurality of TAGs are utilized, ambiguity may arise in an uplink time alignment maintenance operation according to the existing scheme. For example, an operation to release a UL/DL configuration (e.g., a release operation of a PUCCH/SRS, configured DL/UL assignments, a UL grant, and a clear operation of a PUSCH resource) is performed based on an expiration of the time alignment timer related to a TAG (PTAG). At this time, it is unclear whether the operation is performed based on the expiration of any of a plurality of timers (e.g., i) an expiration of each timer, ii) an expiration of a specific timer among a plurality of timers, or iii) expirations of all timers).

Further, since releasing all UL configurations (e.g. PUCCH configurations) will disable HARQ-ACK transmission for DL reception (from all serving cells), this release operation affects a DL operations as well as a UL operation if performed frequently.

An object of the present disclosure is to propose a method to resolve an ambiguity in the operation related to the expiration of the time alignment timer in the maintenance of time alignment based on TRP specific TAs and to minimize an impact of such operation on UL/DL.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present disclosure comprises receiving, from a base station, configuration information related to a timing advance group (TAG), performing an operation related to a maintenance of an uplink timing alignment based on the time alignment timer, and transmitting, to the base station, an uplink channel/signal based on an uplink transmission timing for the TAG. The configuration information includes information for a time alignment timer related to the TAG.

The TAG includes a first TAG and a second TAG belonging to a serving cell. The configuration information includes information for i) a first time alignment timer related to the first TAG and ii) a second time alignment timer related to the second TAG. Each TAG is a primary TAG (PTAG) or a secondary TAG (STAG).

Based on the first time alignment timer and the second time alignment timer being expired, operations of i) flushing of all HARQ buffers, ii) releasing a configured physical uplink control channel (PUCCH), iii) releasing a configured sounding reference signal (SRS), iv) clearing configured downlink assignments and configured uplink grants, v) clearing a physical uplink shared channel (PUSCH) resource for semi-persistent CSI reporting, and vi) maintaining $N_{TA}$ of each TAG are performed.

Based on the first time alignment timer and the second time alignment timer being expired, no uplink transmission may be performed except for a random access preamble transmission and a MsgA transmission.

The method may further comprise receiving configuration information related to a plurality of control resource sets (CORESETs). CORESETs based on a first CORESET pool index and a second CORESET pool index may be configured based on the configuration information related to the CORESETs.

The first TAG may be associated with the first CORESET pool index, and the second TAG may be associated with the second CORESET pool index.

The method may further comprise, based on the first time alignment timer or the second time alignment timer being expired, transmitting information related to the expired time alignment timer.

The information related to the expired time alignment timer may include at least one of i) an ID of the first TAG or the second TAG, ii) a first CORESET pool index related to the first TAG or a second CORESET pool index related to the second TAG, and/or iii) an ID of a transmit and reception point (TRP) associated with the first TAG or the second TAG.

The information related to the expired time alignment timer may be transmitted based on a first uplink resource or a second uplink resource. The first uplink resource may be related to an expiration of the first time alignment timer, and the second uplink resource may be related to an expiration of the second time alignment timer. The first uplink resource may be related to the second CORESET pool index, and the second uplink resource may be related to the first CORESET pool index.

The uplink channel/signal may include i) a first uplink channel/signal transmitted based on an uplink timing for the first TAG and/or ii) a second uplink channel/signal transmitted based on an uplink timing for the second TAG.

The first uplink channel/signal may be i) a first PUSCH, ii) a first PUCCH, or iii) a first SRS, and the second uplink channel/signal may be i) a second PUSCH, ii) a second PUCCH, or iii) a second SRS.

Based on the first time alignment timer or the second time alignment timer being expired, the first uplink channel/signal or the second uplink channel/signal may be dropped.

The method may further comprise, based on i) the first time alignment timer or the second time alignment timer being expired, and ii) the first uplink channel/signal and the second uplink channel/signal being transmitted, receiving a timing advance command medium access control (MAC) control element (CE) (MAC CE). The timing advance command MAC CE may be related to the first TAG or the second TAG.

The method may further comprise, based on i) the first time alignment timer or the second time alignment timer being expired, and ii) the first uplink channel/signal and the second uplink channel/signal being transmitted, receiving downlink control information (DCI).

The DCI may include information related to a physical downlink control channel (PDCCH) order. A random access procedure may be initiated by the PDCCH order.

Based on the first time alignment timer or the second time alignment timer being expired, the uplink channel/signal may be the second uplink channel/signal or the first uplink channel/signal.

Based on the first TAG being a first PTAG and the second TAG being a second PTAG, the operations i) to vi) performed based on the expirations of the first time alignment timer and the second time alignment timer may be performed for all serving cells, and it may be regarded that all running time alignment timers are expired.

Based on the first TAG being a first STAG and the second TAG being a second STAG, the operations i) to vi) performed based on the expirations of the first time alignment timer and the second time alignment timer may be performed for serving cells belonging to the first STAG and serving cells belonging to the second STAG.

Regardless of whether a timing difference between the first TAG and the second TAG exceeds a maximum uplink transmission timing difference related to a stop of an uplink transmission, the uplink channel/signal may be transmitted.

The $N_{TA}$ may be related to a calculation of a timing advance (TA).

The serving cell may be a special cell (SpCell) or a secondary cell (SCell).

Based on the first time alignment timer or the second time alignment timer being expired, at least one of the operations i) to vi) may be performed.

A user equipment (UE) operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include receiving, from a base station, configuration information related to a timing advance group (TAG), performing an operation related to a maintenance of an uplink timing alignment based on the time alignment timer, and transmitting, to the base station, an uplink channel/signal based on an uplink transmission timing for the TAG. The configuration information includes information for a time alignment timer related to the TAG.

The TAG includes a first TAG and a second TAG belonging to a serving cell. The configuration information includes information for i) a first time alignment timer related to the first TAG and ii) a second time alignment timer related to the second TAG. Each TAG is a primary TAG (PTAG) or a secondary TAG (STAG).

Based on the first time alignment timer and the second time alignment timer being expired, operations of i) flushing of all HARQ buffers, ii) releasing a configured physical uplink control channel (PUCCH), iii) releasing a configured sounding reference signal (SRS), iv) clearing configured downlink assignments and configured uplink grants, v) clearing a physical uplink shared channel (PUSCH) resource for semi-persistent CSI reporting, and vi) maintaining $N_{TA}$ of each TAG are performed.

A device according to another embodiment of the present disclosure comprises one or more memories and one or more processors functionally connected to the one or more memories.

The one or more memories include instructions of configuring the one or more processors to perform operations based on being executed by the one or more processors.

The operations include receiving, from a base station, configuration information related to a timing advance group (TAG), performing an operation related to a maintenance of an uplink timing alignment based on the time alignment timer, and transmitting, to the base station, an uplink channel/signal based on an uplink transmission timing for the TAG. The configuration information includes information for a time alignment timer related to the TAG.

The TAG includes a first TAG and a second TAG belonging to a serving cell. The configuration information includes information for i) a first time alignment timer related to the first TAG and ii) a second time alignment timer related to the second TAG. Each TAG is a primary TAG (PTAG) or a secondary TAG (STAG).

Based on the first time alignment timer and the second time alignment timer being expired, operations of i) flushing of all HARQ buffers, ii) releasing a configured physical uplink control channel (PUCCH), iii) releasing a configured sounding reference signal (SRS), iv) clearing configured downlink assignments and configured uplink grants, v) clearing a physical uplink shared channel (PUSCH) resource for semi-persistent CSI reporting, and vi) maintaining $N_{TA}$ of each TAG are performed.

One or more non-transitory computer-readable media according to another embodiment of the present disclosure stores one or more instructions.

The one or more instructions executable by one or more processors configure the one or more processors to perform operations.

The operations include receiving, from a base station, configuration information related to a timing advance group (TAG), performing an operation related to a maintenance of an uplink timing alignment based on the time alignment timer, and transmitting, to the base station, an uplink channel/signal based on an uplink transmission timing for the TAG. The configuration information includes information for a time alignment timer related to the TAG.

The TAG includes a first TAG and a second TAG belonging to a serving cell. The configuration information includes information for i) a first time alignment timer related to the first TAG and ii) a second time alignment timer related to the second TAG. Each TAG is a primary TAG (PTAG) or a secondary TAG (STAG).

Based on the first time alignment timer and the second time alignment timer being expired, operations of i) flushing of all HARQ buffers, ii) releasing a configured physical uplink control channel (PUCCH), iii) releasing a configured sounding reference signal (SRS), iv) clearing configured downlink assignments and configured uplink grants, v) clearing a physical uplink shared channel (PUSCH) resource for semi-persistent CSI reporting, and vi) maintaining $N_{TA}$ of each TAG are performed.

A method performed by a base station in a wireless communication system according to another embodiment of the present disclosure comprises transmitting, to a user equipment (UE), configuration information related to a timing advance group (TAG), and receiving, from the UE, an uplink channel/signal transmitted based on an uplink transmission timing for the TAG.

The configuration information includes information for a time alignment timer related to the TAG. An operation related to a maintenance of an uplink timing alignment based on the time alignment timer is performed by the UE.

The TAG includes a first TAG and a second TAG belonging to a serving cell. The configuration information includes information for i) a first time alignment timer related to the first TAG and ii) a second time alignment timer related to the second TAG. Each TAG is a primary TAG (PTAG) or a secondary TAG (STAG).

Based on the first time alignment timer and the second time alignment timer being expired, operations of i) flushing of all HARQ buffers, ii) releasing a configured physical uplink control channel (PUCCH), iii) releasing a configured sounding reference signal (SRS), iv) clearing configured downlink assignments and configured uplink grants, v) clearing a physical uplink shared channel (PUSCH) resource for semi-persistent CSI reporting, and vi) maintaining $N_{TA}$ of each TAG are performed by the UE.

A base station operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include transmitting, to a user equipment (UE), configuration information related to a timing advance group (TAG), and receiving, from the UE, an uplink channel/signal transmitted based on an uplink transmission timing for the TAG.

The configuration information includes information for a time alignment timer related to the TAG. An operation related to a maintenance of an uplink timing alignment based on the time alignment timer is performed by the UE.

The TAG includes a first TAG and a second TAG belonging to a serving cell. The configuration information includes information for i) a first time alignment timer related to the first TAG and ii) a second time alignment timer related to the second TAG. Each TAG is a primary TAG (PTAG) or a secondary TAG (STAG).

Based on the first time alignment timer and the second time alignment timer being expired, operations of i) flushing of all HARQ buffers, ii) releasing a configured physical uplink control channel (PUCCH), iii) releasing a configured sounding reference signal (SRS), iv) clearing configured downlink assignments and configured uplink grants, v) clearing a physical uplink shared channel (PUSCH) resource for semi-persistent CSI reporting, and vi) maintaining $N_{TA}$ of each TAG are performed by the UE.

[ADVANTAGEOUS EFFECTS]

According to an embodiment of the present disclosure, a release operation based on an expiration of a time alignment timer is performed in a limited manner based on expirations of a plurality of time alignment timers. Therefore, a problem of ambiguity in terms of a UE/base station operation when operations performed when an existing time alignment timer is expired should be performed can be resolved.

Further, problems caused by frequent occurrence of UL/DL configuration release operations can be prevented. Specifically, i) an increase in signaling overhead due to UL/DL-related reconfiguration per serving cell and ii) a decrease in reliability of UL/DL operations can be prevented.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.
FIG. 2 illustrates a timing advance command MAC CE according to an embodiment of the present disclosure.
FIG. 3 is a flowchart illustrating a method performed by a UE in a wireless communication system according to an embodiment of the present disclosure.
FIG. 4 is a flowchart illustrating a method performed by a base station in a wireless communication system according to another embodiment of the present disclosure.
FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

| Uplink frame number *i* for transmission from the UE shall start |
| --- |
| $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_c$  before the start of the corresponding downlink frame at the UE where<br><br>- $N_{TA}$ and $N_{TA,offset}$ are given by clause 4.2 of [5, TS 38.213], except for msgA transmission on PUSCH where $N_{TA}$ = 0 shall be used;<br><br>- $N_{\mathrm{TA,adj}}^{\mathrm{common}}$  given by clause 4.2 of [5, TS 38.213] is derived from the higher-layer parameters *TACommon, TACommonDrift,* and *TACommonDriftVariation* if configured, otherwise $N_{\mathrm{TA,adj}}^{\mathrm{common}} = 0$;<br><br>- $N_{\mathrm{TA,adj}}^{\mathrm{UE}}$  given by clause 4.2 of TS 38.213] is computed by the UE based on UE position and serving-satellite-ephemeris-related higher-layers parameters if configured, otherwise $N_{\mathrm{TA,adj}}^{\mathrm{UE}} = 0$. |

In Table 1, $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)

$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$N_{TA,offset}$

Case 1) Method of configuring a specific value per serving cell

For example, a UE may receive configuration information (e.g., ServingCellConfigCommon Information) including information on $N_{TA,offset}$ from a base station. The configuration information may be received based on RRC signaling. Table 2 below shows the configuration information.

【Table 2】

---

–        *ServingCellConfigCommon*

The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.

**ServingCellConfigCommon information element**

-- ASN1START

-- TAG-SERVINGCELLCONFIGCOMMON-START


ServingCellConfigCommon ::=        SEQUENCE {

　　physCellId                                                                PhysCellId OPTIONAL,    -- Cond HOAndServCellAdd,

　　　　downlinkConfigCommon                                      DownlinkConfigCommon OPTIONAL,    -- Cond HOAndServCellAdd

　　　　uplinkConfigCommon                                          UplinkConfigCommon OPTIONAL,    -- Need M

　　　　supplementaryUplinkConfig                                 UplinkConfigCommon

---

OPTIONAL,    -- Need S

　　　　n-TimingAdvanceOffset                     ENUMERATED  {  n0,  n25600,  n39936  } OPTIONAL,    -- Need S

　　　　　　　　　　　　　　　　　(…)

}

-- TAG-SERVINGCELLCONFIGCOMMON-STOP

-- ASN1STOP

---

*n-TimingAdvanceOffset*

The N_TA-Offset to be applied for all uplink transmissions on this serving cell. If the field is absent, the UE applies the value defined for the duplex mode and frequency range of this serving cell. See TS 38.133 [14], table 7.1.2-2.

---

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

【Table 3】

| Table 7.1.2-2: The Value of $N_{\text{TA offset}}$ | |
| --- | --- |
| **Frequency range and band of cell used for uplink transmission** | $N_{\text{TA offset}}$ **(Unit: $T_C$)** |
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |

[1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.

[2] Note 2: Void

$N_{TA}$

Case 1) Method of configuring through a random access response (RAR)

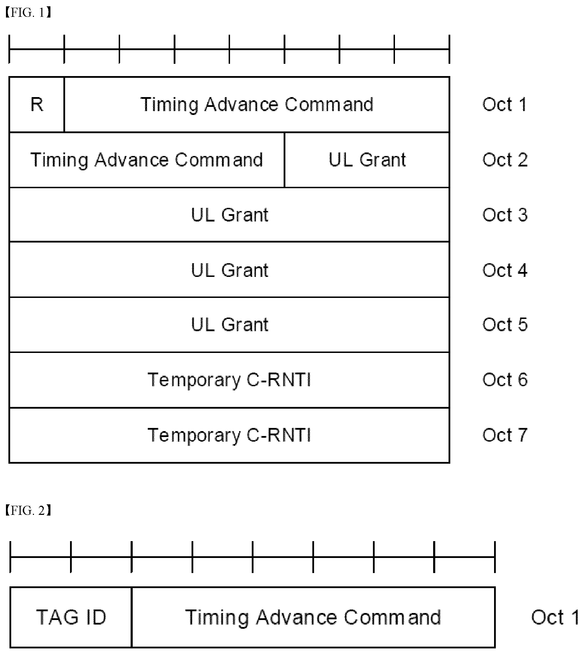

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

6.2.3 MAC payload for Random Access Response

The MAC RAR is of fixed size as depicted in Figure 6.2.3-1, and consists of the following fields:

- R: Reserved bit, set to 0;

- Timing Advance Command: The Timing Advance Command field indicates the index value $T_A$ used to control the amount of timing adjustment that the MAC entity has to apply in TS 38.213 [6]. The size of the Timing Advance Command field is 12 bits;

- UL Grant: The Uplink Grant field indicates the resources to be used on the uplink in TS 38.213 [6]. The size of the UL Grant field is 27 bits;

- Temporary C-RNTI: The Temporary C-RNTI field indicates the temporary identity that is used by the MAC entity during Random Access. The size of the Temporary C-RNTI field is 16 bits.

The MAC RAR is octet aligned.

Table 5 below shows transmission timing adjustments based on the timing advance command.

[Table 5]

4.2 Transmission timing adjustments

A UE can be provided a value $N_{TA,offset}$ of a timing advance offset for a serving cell by n-*TimingAdvanceOffset* for the serving cell. If the UE is not provided *n-TimingAdvanceOffset* for a serving cell, the UE determines a default value $N_{TA,offset}$ of the timing advance offset for the serving cell as described in [10, TS 38.133].

(continued)

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.

A timing advance command [11, TS 38.321] in case of random access response or in an absolute timing advance command MAC CE, $T_A$, for a TAG indicates $N_{TA}$ values by index values of $T_A$ = 0, 1, 2, ..., 3846, where an amount of the time alignment for the TAG with SCS of $2^\mu \cdot 15$ kHz is $N_{TA} = T_A \cdot 16 \cdot 64/2^\mu$. $N_{TA}$ is defined in [4, TS 38.211] and is relative to the SCS of the first uplink transmission from the UE after the reception of the random access response or absolute timing advance command MAC CE.

In other cases, a timing advance command [11, TS 38.321], $T_A$, for a TAG indicates adjustment of a current $N_{TA}$ value, $N_{TA\ old}$, to the new $N_{TA}$ value, $N_{TA\ new}$, by index values of $T_A$ = 0, 1, 2,..., 63, where for a SCS of $2^\mu \cdot 15$ kHz, $N_{TA\ new} = N_{TA\ old} + (T_A - 31) \cdot 16 \cdot 64/2^\mu$.

Adjustment of an $N_{TA}$ value by a positive or a negative amount indicates advancing or delaying the uplink transmission timing for the TAG by a corresponding amount, respectively.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted (see Table 5). The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. Table 6 below shows payload of the timing advance command MAC CE.

[Table 6]

6.1.3.4 Timing Advance Command MAC CE

The Timing Advance Command MAC CE is identified by MAC subheader with LCID as specified in Table 6.2.1-1.

It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;

- Timing Advance Command: This field indicates the index value $T_A$ (0, 1, 2... 63) used to control the amount of timing adjustment that MAC entity has to apply (as specified in TS 38.213 [6]). The length of the field is 6 bits.

Timing Advance Group (TAG)

A timing advance group (TAG) refers to a group of serving cells that use the same timing advance value. Table 7 below shows definition of the TAG and configuration information related to the TAG.

【Table 7】

**Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.

*TAG-Config*

The IE *TAG-Config* is used to configure parameters for a time-alignment group.

**TAG-Config information element**

-- ASN1START

-- TAG-TAG-CONFIG-START

```
TAG-Config ::=                   SEQUENCE {
    tag-ToReleaseList                    SEQUENCE (SIZE (1..maxNrofTAGs)) OF TAG-Id
OPTIONAL,     -- Need N
    tag-ToAddModList                        SEQUENCE (SIZE (1..maxNrofTAGs)) OF TAG
OPTIONAL      -- Need N
}


TAG ::=                          SEQUENCE {
    tag-Id                       TAG-Id,
    timeAlignmentTimer               TimeAlignmentTimer,
    ...
}


TAG-Id ::=                       INTEGER (0..maxNrofTAGs-1)
```

| | |
|---|---|
| ***tag-Id*** | |
| Indicates the TAG of the SpCell or an SCell, see TS 38.321 [3]. Uniquely identifies the TAG within the scope of a Cell Group (i.e. MCG or SCG). | |
| ***timeAlignmentTimer*** | |
| The timeAlignmentTimer for TAG with ID tag-Id, as specified in TS 38.321 [3]. | |
| **maxNrofTAGs** | INTEGER ::= 4 -- Maximum number of Timing Advance Groups |

–    ***CellGroupConfig***

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

**CellGroupConfig information element**

-- ASN1START

-- TAG-CELLGROUPCONFIG-START

```
-- Configuration of one Cell-Group:
CellGroupConfig ::=                                SEQUENCE {
```

```
    cellGroupId                                CellGroupId,
        rlc-BearerToAddModList                            SEQUENCE (SIZE(1..maxLC-ID)) OF RLC-
BearerConfig                        OPTIONAL,    -- Need N
        rlc-BearerToReleaseList                            SEQUENCE (SIZE(1..maxLC-ID)) OF
LogicalChannelIdentity                OPTIONAL,    -- Need N
        mac-CellGroupConfig                                        MAC-CellGroupConfig
OPTIONAL,    -- Need M
        physicalCellGroupConfig                                PhysicalCellGroupConfig
OPTIONAL,    -- Need M
        spCellConfig                                        SpCellConfig
OPTIONAL,    -- Need M
        sCellToAddModList                        SEQUENCE (SIZE (1..maxNrofSCells)) OF
SCellConfig                    OPTIONAL,    -- Need N
        sCellToReleaseList                            SEQUENCE (SIZE (1..maxNrofSCells)) OF
SCellIndex                    OPTIONAL,    -- Need N
    (…)
```

**MAC-CellGroupConfig**

The IE MAC-CellGroupConfig is used to configure MAC parameters for a cell group, including DRX.

*MAC-CellGroupConfig information element*

-- ASN1START

-- TAG-MAC-CELLGROUPCONFIG-START

```
MAC-CellGroupConfig ::=                SEQUENCE {
        drx-Config                                            SetupRelease { DRX-Config }
OPTIONAL,    -- Need M
        schedulingRequestConfig                                SchedulingRequestConfig
OPTIONAL,    -- Need M
        bsr-Config                                            BSR-Config
OPTIONAL,    -- Need M
        tag-Config                                            TAG-Config
OPTIONAL,    -- Need M
        phr-Config                                            SetupRelease { PHR-Config }
OPTIONAL,    -- Need M
        skipUplinkTxDynamic                BOOLEAN,
    (…)
```

**CellGroupId**

The IE CellGroupId is used to identify a cell group. Value 0 identifies the master cell group. Other values identify secondary cell groups. In this version of the specification only values 0 and 1 are supported.

*CellGroupId information element*

**-- ASN1START**

```
-- TAG-CELLGROUPID-START
```

```
CellGroupId ::=                                    INTEGER (0.. maxSecondaryCellGroups)

-- TAG-CELLGROUPID-STOP

-- ASN1STOP
```

```
maxSecondaryCellGroups INTEGER ::= 3
```

Procedure

Uplink time alignment may be performed based on Table 8 below.

[Table 8]

5.2 Maintenance of Uplink Time Alignment

RRC configures the following parameters for the maintenance of UL time alignment:

- *timeAlignmentTimer* (per TAG) which controls how long the MAC entity considers the Serving Cells belonging to the associated TAG to be uplink time aligned;

- *inactivePosSRS-TimeAlignmentTimer* which controls how long the MAC entity considers the Positioning SRS transmission in RRC_INACTIVE in clause 5.26 to be uplink time aligned;

- *cg-SDT-TimeAlignmentTimer* which controls how long the MAC entity considers the uplink transmission for CG-SDT to be uplink time aligned.

The MAC entity shall:

1> when a Timing Advance Command MAC CE is received, and if an $N_{TA}$ (as defined in TS 38.211 [8]) has been maintained with the indicated TAG:

2> apply the Timing Advance Command for the indicated TAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure triggered as in clause 5.27 is ongoing:

3> start or restart the *cg-SDT-TimeAlignmentTimer* associated with the indicated TAG.

2> else:

3> start or restart the *timeAlignmentTimer* associated with the indicated TAG.

1> when a Timing Advance Command is received in a Random Access Response message for a Serving Cell belonging to a TAG or in a MSGB for an SpCell:

2> if the Random Access Preamble was not selected by the MAC entity among the contention-based Random Access Preamble:

3> apply the Timing Advance Command for this TAG;

3> start or restart the *timeAlignmentTimer* associated with this TAG.

2> else if the *timeAlignmentTimer* associated with this TAG is not running:

3> apply the Timing Advance Command for this TAG;

3> start the *timeAlignmentTimer* associated with this TAG;

3> when the Contention Resolution is considered not successful as described in clause 5.1.5; or

3> when the Contention Resolution is considered successful for SI request as described in clause 5.1.5, after transmitting HARQ feedback for MAC PDU including UE Contention Resolution Identity MAC CE:

4> stop *timeAlignmentTimer* associated with this TAG.

3> when the Contention Resolution is considered not successful as described in clause 5.1.5:

4> if CG-SDT procedure triggered as in clause 5.27 is ongoing:

5> set the $N_{TA}$ value to the value before applying the received Timing Advance Command as in TS 38.211 [8].

3> when the Contention Resolution is considered successful for Random Access procedure while the CG-SDT procedure is ongoing:

4> stop *timeAlignmentTimer* associated with this TAG;

4> start or restart the *cg-SDT-TimeAlignmentTimer* associated with this TAG.

---

3> when the Contention Resolution is considered successful for Random Access procedure while SRS transmission in RRC _INACTIVE is ongoing:

4> start or restart the *inactivePosSRS-TimeAlignmentTimer* associated with this TAG.

2> else:

3> ignore the received Timing Advance Command.

1> when an Absolute Timing Advance Command is received in response to a MSGA transmission including C-RNTI MAC CE as specified in clause 5.1.4a:

2> apply the Timing Advance Command for PTAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure is ongoing:

3> start or restart the *cg-SDT-TimeAlignmentTimer* associated with PTAG.

2> else:

3> start or restart the *timeAlignmentTimer* associated with PTAG.

1> when the indication is received from upper layer for stopping the *inactivePosSRS-TimeAlignmentTimer:*

2> stop the *inactivePosSRS-TimeAlignmentTimer.*

1> when the indication is received from upper layer for starting the *inactivePosSRS-TimeAlignmentTimer:*

2> start or restart the *inactivePosSRS-TimeAlignmentTimer.*

1> when instruction from the upper layer has been received for starting the *cg-SDT-TimeAlignmentTimer:*

2> start the *cg-SDT-TimeAlignmentTimer.*

1> when instruction from the upper layer has been received for stopping the *cg-SDT-TimeAlignmentTimer:*

2> consider the *cg-SDT-TimeAlignmentTimer* as expired.

1> when instruction from the upper layer has been received for starting the *TimeAlignmentTimer* associated with PTAG:

2> start the *TimeAlignmentTimer* associated with PTAG.

1> when a *timeAlignmentTimer* expires:

2> if the *timeAlignmentTimer* is associated with the PTAG:

3> flush all HARQ buffers for all Serving Cells;

3> notify RRC to release PUCCH for all Serving Cells, if configured,

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain $N_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured,

3> notify RRC to release SRS, if configured;

3> clear any configured downlink assignments and configured uplink grants;

3> clear any PUSCH resource for semi-persistent CSI reporting;

3> maintain $N_{TA}$ (defined in TS 38.211 [8]) of this TAG.

1> when the *inactivePosSRS-TimeAlignmentTimer* expires:

2> notify RRC to release Positioning SRS for RRC_INACTIVE configuration(s).

1> when the *cg-SDT-TimeAlignmentTimer* expires:

2> clear any configured uplink grants;

2> if a PDCCH addressed to the MAC entity's C-RNTI after initial transmission for the CG-SDT with CCCH message has not been received:

3> consider ongoing CG-SDT procedure as terminated;

3> indicate the expiry of *cg-SDT-TimeAlignmentTimer* to the upper layer.

2> flush all HARQ buffers;

2> maintain $N_{TA}$ (defined in TS 38.211 [8]) of this TAG.

(continued)

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.

The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC_INACTIVE as in clause 5.26 is not on-going.

Furthermore, when the *timeAlignmentTimer* associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the *cg-SDT-TimeAlignmentTimer* is not running during the ongoing CG-SDT procedure as triggered in clause 5.27. The MAC entity shall not perform any uplink transmission except the Random Access Preamble and MSGA transmission when *inactivePosSRS-TimeAlignmentTimer* is not running during the procedure for SRS transmission in RRC_INACTIVE as in clause 5.26.

The contents of the foregoing (Multi-TRP and Timing Advance, etc.) may be applied in combination with the methods proposed in the present disclosure, which will be described later, or may be supplemented to clarify the technical characteristics of the methods proposed in the present disclosure. The methods described below are only classified for convenience of explanation, and some components of one method may be substituted with some components of another method or may be applied in combination with each other.

Hereinafter, i) a method for the base station to configure/indicate multiple TAs for a specific CC/BWP in uplink transmission of the terminal and ii) a method for the terminal to request/acquire multiple TAs are described, and subsequent terminal operations are proposed.

According to the 3GPP standard up to NR Rel-17, timing advance (TA) configuration for UE uplink transmission of the base station to compensate for a propagation delay between the base station and the UE can be performed via higher layer signaling. In addition, TA for specific cell(s) can be separately configured/managed through the concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 9 below, the configuration of TA values for multi-DCI (M-DCI) based M-TRP operation is considered.

[Table 9]

5. Study, and if justified, specify the following

- Two TAs for UL multi-DCI for multi-TRP operation

- Power control for UL single DCI for multi-TRP operation where unified TCI framework extension in objective 2 is assumed.

For the case of simultaneous UL transmission from multiple panels, the operation will only be limited to the objective 6 scenarios.

Here, the TA (TA value) may be based on the description of FIG. 2 and the contents described in the above timing advance (TA) related procedure.

In the RAN1 and RAN2 standards before Rel-18, a base station manages a UE TA value based on values of $N_{TA}$ and $N_{TA,offset}$. The base station may set $N_{TA}$ as follows. The base station may set $N_{TA}$ based on i) RAR MAC CE or ii) TA command MAC CE. In addition, the base station may configure the UE with up to four TAGs with respect to a specific cell or cell combination using the concept of a timing advance group (TAG). The base station may perform update/management for the $N_{TA}$ value for each TAG. In other words, the $N_{TA}$ value related to uplink timing of the UE may be determined/set based on the RAR MAC CE/TA command MAC CE for each TAG.

In Rel-18 MIMO, in order to support different TA values of the UE based on a target TRP, i) the base station may configure two TRP-specific values in a specific CC/BWP for the $N_{TA}$ (or/and $N_{TA,offset}$) value, or ii) the base station may configure a separate parameter (e.g., $N_{TA,TRP1}$ and/or $N_{TA,TRP2}$) in a specific CC/BWP via MAC CE signaling so as to configure/assign a TRP-specific TA offset value in addition to the $N_{TA}$ or/and $N_{TA,offset}$ value. In the method ii), in the calculation of the existing TA value of the UE, it may be necessary to additionally subtract/add the TA offset due to the separate parameter. In the following, two TA values managed by the methods i) or/and ii) may be expressed as TA1 (or first TA) and TA2 (or second TA). In this instance, the two TA values may correspond to two TAGs. For example, the TA1 corresponding to TRP1 may be related to TAG 1, and the TA2 corresponding to TRP2 may be related to TAG 2.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In the unified TCI framework introduced in Rel-17 MIMO, the base station may dynamically indicate a specific reference RS to be used as a common beam for DL/UL receive (Rx)/transmit (Tx) beam of the UE using a DL/UL joint TCI state and/or a DL/UL separate TCI state.

The DL/UL joint TCI state may be based on a joint TCI state configured for UL and DL operations. When unifiedTCI-StateType of a serving cell is set to 'joint', the joint TCI state may be configured based on dl-OrJointTCI-StateList.

The DL/UL separate TCI state may be based on a DL TCI state and/or an UL TCI state. When unifiedTCI-StateType of the serving cell is set to 'separate', the DL TCI state may be configured based on dl-OrJointTCI-StateList, and the UL TCI state may be configured based on ul-TCI-ToAddModList.

The TCI state (e.g., joint/DL TCI state) may be indicated/configured based on dl-OrJoint-TCIStateList within PDSCH-config. The dl-OrJoint-TCIStateList may i) provide a list of up to 128 TCI states (explicitlist → dl-OrJointTCI-StateToAddModList) or ii) indicate a serving cell and a (DL/UL) BWP in which the list of TCI states (dl-OrJointTCI-StateToAddModList) is defined (unifiedTCI-StateRef → ServingCellAndBWP-Id). The TCI state (e.g., joint/DL TCI state) may provide reference RSs for DM-RS of PDSCH, DM-RS of PDCCH, and quasi co-location of CSI-RS. The TCI state (e.g., joint TCI state) may provide reference RSs for determining a dynamic grant based PUSCH, a configured grant based PUSCH, and an uplink (UL) Tx spatial filter for PUCCH resources and SRS.

The UL TCI state may be indicated/configured by ul-TCI-StateList within BWPUplinkDedicated. The ul-TCI-StateList may i) provide a list of up to 64 UL TCI states (explicitlist → ul-TCI-ToAddModList) or ii) indicate a serving cell and an UL BWP in which UL TCI states applicable to the UL BWP are defined (unifiedTCI-StateRef → ServingCellAndBWP-Id).

Rx/Tx beam of DL/UL channel/RS that is not a common beam target may be configured as follows. The TCI state of the unified TCI framework may be configured for each channel/RS based on RRC and MAC CE signaling.

Until Rel-17, standardization was carried out only when M/N, which is the number of DL/UL common beams to be supported in the unified TCI framework (the number of DL/UL TCI states), was M/N = 1. In other words, the unified TCI framework was not supported for M-TRP. Specifically, in a serving cell in which two CORESET pool indexes are set (more than one value for the coresetPoolIndex), unifiedTCI-StateType is not set.

Here, M/N denotes the number of DL common beams (M) and/or the number of UL common beams (N). For example, M/N = 1 may mean that the number of DL common beams (DL TCI state) and/or the number of UL common beams (UL TCI state) is 1. For example, M/N = 1 may mean that the number of DL and UL common beams (joint TCI states) is 1.

If M/N > 1 is supported in Rel-18, two or more TCI states and source/target TRP may have a connection relationship.

In particular, in the M-DCI based M-TRP operation, two or more TCI states corresponding to M/N > 1 may have a connection relationship with the CORESET pool indexes. As discussed above, the two TA values for multiple TRPs may be configured/indicated by higher layer signaling, such as MAC CE, in the same manner as the existing standard.

In the case of a UE (UE after Rel-17) that supports the unified TCI applied to FR 2, a plurality of TA values may be connected/corresponded to two or more TCI states corresponding to M/N > 1. For example, when M/N = 2 or/and N = 2, a (first/lowest) TCI state firstly configured/indicated may correspond to TA1 (e.g., TAG 1 or TA1 for TAG 1), and a (second/second-lowest) TCI state secondly configured/indicated may correspond to TA2 (e.g., TAG 2 or TA2 for TAG 2).

Specifically, a specific payload may be included/added/defined in the MAC CE to configure/assign/activate the TA value to each of the two or more TCI states corresponding to M/N > 1. For example, a payload for a target TCI state(s) (group) for assigning each TA value (e.g., TA1 and TA2) may exist in an MAC CE message configuring the two TA values.

Agreements for the plurality of TA values are shown in Table 10 below.

[Table 10]

| Agreement |
|---|
| Enhancement on two TAs for UL multi-DCI for multi-TRP operation is supported in Rel-18. |
| Note 1: whether (1) the network signals two TACs or (2) the network signals one TAC and the UE deriving the second TA can be further studied. |
| Note 2: evaluations can be considered on as-needed basis. |

**Agreement**

Support two TA enhancement for both intra-cell and inter-cell multi-DCI multi-TRP scenarios in Rel-18.

**Agreement**

Enhancements on two TAs for UL multi-DCI for multi-TRP operation are applicable to both FR1 and FR2.

**Agreement**

Two TA enhancement for uplink multi-DCI based multi-TRP operation are applicable to *at least*:

• TDM based multi-DCI uplink transmission

• simultaneous multi-DCI uplink transmission (if simultaneous uplink multi-DCI uplink transmission is supported in Agenda 9.1.4.1)

• Note: Whether two TA enhancement is applicable to other schemes is a separate discussion, which is not in the scope of AI 9.1.1.2.

**Agreement**

For multi-DCI based multi-TRP operation with two TAs, support configuring two TAGs belonging to a serving cell.

**Agreement**

For multi-DCI based multi-TRP operation with two TAs, study the impact of two TAs for the following:

- RACH triggered by PDCCH order in intra-cell MTRP case

- RACH triggered by PDCCH order in inter-cell MTRP case

◦ Which might require RACH enhancement as well

- UE triggered RACH by CBRA or CFRA in RRC connected mode

**Agreement**

For multi-DCI multi-TRP operation with two TAs, up to two n-TimingAdvanceOffset value per serving cell is supported

**Agreement**

Multi-DCI multi-TRP operation with two TAs is supported for Rel-15/16/17 TCI frameworks and unified TCI framework extension discussed in 9.1.1.1 as well as UL beam indication via spatial relation.

**Agreement**

For inter-cell multi-DCI based Multi-TRP operation with two TA enhancement, support one of the alternatives (down selection to be done in RAN1#111):

• Alt 1: PDCCH scheduling RAR will always be received from serving cell → there is no need for additional type 1 CSS configuration per additional PCI

• Alt 2: In addition to PDCCH scheduling RAR being received from serving cell, reception of PDCCH scheduling RAR from a TRP corresponding to an additional PCI for a RACH procedure associated to the additional PCI is supported → additional type 1 CSS configuration per additional PCI needs to be supported

**Agreement**

---

For multi-DCI based inter-cell Multi-TRP operation with two TA enhancement, support PRACH configuration associated with additional configured PCIs different from the PCI of the serving cell.

**Agreement**

For multi-DCI based inter-cell Multi-TRP operation with two TA enhancement, support a mechanism to determine which PRACH configuration (i.e., RACH configuration corresponding to serving cell PCI or an additional PCI) to be used in the RACH procedure triggered by PDCCH order

**Agreement**

For multi-DCI based Multi-TRP operation with two TA enhancement, support one of the following alternatives in RAN1#111:

• Alt 1: PDCCH order sent by one TRP triggers RACH procedure towards the same TRP

◦ note: with Alt 1, PDCCH order sent by one TRP triggering RACH procedure towards another TRP is not allowed

• Alt 2: PDCCH order sent by one TRP triggers RACH procedure towards either the same TRP or a different TRP

(continued)

○ This does not preclude PDCCH order triggering two RACH procedures for two TRPs

**Agreement**

For multi-DCI based Multi-TRP operation with two TA enhancement, support enhancements related to indicating TAG ID via absolute TA command:

• FFS: whether the indication is implicit or explicit

• Detailed indication schemes are FFS

• This does not preclude indication of two TAG IDs (if supported)

• Note: This applies at least to MSGB in case of C-RNTI

**Conclusion**

For multi-DCI based Multi-TRP operation with two TA enhancement, it cannot always be assumed that both TRPs have knowledge of the overlapping region between transmissions corresponding to the two TAs.

• Note: This doesn't prevent the network from applying scheduling restrictions even if the TRPs have no knowledge of the overlapping region

**Agreement**

For intra-cell multi-DCI based Multi-TRP operation with two TA enhancement, support at least one of the following alternatives (down selection to be done in RAN1#111):

• Alt 1: indicate TAG ID as part of TA command in RAR

• Alt 2: indicate TAG ID as part of PDCCH order

• Alt 3: divide SSBs into two groups, one for each TRP. If a SSB associated to a RACH procedure belongs to the nth group (n=1,2), then the TA obtained via the RACH procedure corresponds to the nth TRP.

• Alt 4: divide RACH resources into two groups, where for a RACH procedure, if the corresponding RACH resource belongs to the nth group (n=1,2), then the TA obtained via the RACH procedure corresponds to the nth TRP.

• Alt 5: divide preambles into two groups, where for a RACH procedure, if the corresponding preamble belongs to the nth group (n=1,2), then the TA obtained via the RACH procedure corresponds to the nth TRP

• Alt 6: TAG ID is associated with CORESETPoolIndex and TAG ID is determined based on the CORESETPoolIndex of PDCCH order

• Alt 7: Each TCI state is associated with a TAG ID, and the TAG ID corresponding to RACH triggered by a PDCCH order is determined based on the TCI state used to receive the PDCCH order

---

Note: If Alt 1 or Alt 2 is downselected, then it does not preclude indication of two TAG IDs (if supported)

**Agreement**

For multi-DCI based Multi-TRP operation with two TA enhancement, support CFRA triggered by PDCCH order for both intra-cell and inter-cell cases.

**Agreement**

For multi-DCI based Multi-TRP operation with two TA enhancement, support the case where a PDCCH order sent by one TRP triggers RACH procedure towards either the same TRP or a different TRP at least for inter-cell Multi-DCI.

**Agreement**

For associating TAGs to target UL channels/signals for multi-DCI based multi-TRP operation, support the following:

Associate TAG to TCI-state

• Associate TAG ID with UL/joint TCI state

• For UL transmission, the TAG ID associated with the UL/joint TCI state is utilized

• A baseline is UE expects that the [activated] UL/joint TCI states [of UL signals/channels] associated to one CORESET Pool Index correspond to one TAG

• Working Assumption: A UE may report that it supports that the [activated] UL/joint TCI states [of UL signals/channels] associated to one CORESETPoolIndex correspond to both TAGs

FFS: on how to handle association when Rel-15/16 spatial relation framework is used for

• PUCCH

• DG/CG Type 1/Type 2 PUSCH

• AP/SP/P SRS

**Agreement**

Confirm the following working assumption:

(continued)

For multi-DCI based inter-cell Multi-TRP operation with two TA enhancement, one additional PRACH configuration is supported for each configured additional PCI
• the additional PRACH configuration is used in a RACH procedure triggered by a PDCCH order for the corresponding configured additional PCI
**Agreement**
For multi-DCI based Multi-TRP operation with two TA enhancement, for the case when the UE does not support UL STxMP transmission, down-select at least one of the following in RAN1#112bis-e:
• Alt 1: Introducing a time gap X between two UL transmissions associated with two different TA values
◦ E.g., X symbols in the slot(s) corresponding to the two UL transmission remain unused
◦ FFS: How X is determined
• Alt 2: Reduce the overlapping duration of one of the two UL transmissions
• Alt 3: Scheduling restriction is applied such that the UE does not expect the two UL transmissions to overlap
• Other alternatives are not precluded

Operations/methods/terms according to an embodiment of the present disclosure described below may be based on Table 10. For example, the operations/methods/terms according to an embodiment of the present disclosure described below may be interpreted/changed/applied based on Table 10.

For example, the plurality of TA values may mean a plurality of timing advance groups (TAGs) or a plurality of TAG IDs. One TA value may mean one TAG (TAG ID).

For example, the plurality of TA values may mean TA values corresponding to a plurality of TAGs (a plurality of TAG IDs). One TA value may mean a TA value (in $T_{TA}$ Table 1) for one TAG (TAG ID).

In the TCI state configuration (TCI state pool) for unified TCI, the two TRP-specific TA values (e.g., two TAGs or TAs corresponding to two TAGs) may be connected/corresponding to a specific TCI state(s) (group). When two TA values are connected/corresponded to the two TCI states corresponding to M/N > 1, the UE may perform UL transmission using a TRP-specific TA value connected to each TCI state in the UL transmission using each TCI state. For example, timing of UL transmission based on a first TCI state may be determined based on TA related to the first TCI state (e.g., a first TAG or a first TA for a first TAG), and timing of UL transmission based on a second TCI state may be determined based on TA related to the second TCI state (e.g., a second TAG or a second TA for a second TAG).

However, even if the unified TCI is supported by the UE, UL spatialRelationInfo or/and reference RS of UL TCI cannot be applied in FR 1 (Frequency Range 1). For example, a UE capability for spatialRelation of the UE may be defined as shown in Table 11 below.

[Table 11]

*spatialRelations, spatialRelations-v1640*
Indicates whether the UE supports spatial relations. The capability signalling comprises the following parameters.
- *maxNumberConfiguredSpatialRelations* indicates the maximum number of configured spatial relations per CC for PUCCH and SRS. It is not applicable to FR1 and applicable to FR2 only. The UE is mandated to report 16 or higher values. *maxNumberConfiguredSpatialRelations-v1640* indicates the maximum number of configured spatial relations per CC for PUCCH and SRS with UE supporting the configuration of maximum 64 PUCCH spatial relations per BWP per CC;
- *maxNumberActiveSpatialRelations* indicates the maximum number of active spatial relations with regarding to PUCCH and SRS for PUSCH, per BWP per CC. It is not applicable to FR1 and applicable and mandatory to report one or higher value for FR2 only;
- *additionalActiveSpatialRelationPUCCH* indicates support of one additional active spatial relation for PUCCH. It is mandatory with capability signalling if *maxNumberActiveSpatialRelations* is set to n1;
- *maxNumberDL-RS-QCL-TypeD* indicates the maximum number of downlink RS resources used for QCL type D in the active TCI states and active spatial relation information, which is optional.
The UE is mandated to report *spatialRelations* for FR2. if *maxNumberConfiguredSpatialRelations-v1640* is reported, UE shall report value *n96* in *maxNumberConfiguredSpatialRelations.*

Referring to Table 11, spatial relations for PUCCH and SRS are not supported for FR1 (e.g., UE operation in FR1).

Therefore, for FR1, there may be ambiguity in the UE operation when the base station configures/indicates the two TA values using the unified TCI framework.

The present disclosure describes i) a method for the BS to configure/indicate multiple TAs for a specific CC/BWP for uplink transmission of a UE (especially FR1) as discussed above, and ii) a method for the UE to request/acquire multiple TAs, and proposes subsequent UE operations.

In the present disclosure, '/' may be interpreted as 'and', 'or', or "and/or" based on the context.

Proposal 1

A UE may receive a unified TCI configuration corresponding to M/N > 1 (in FR1 operation). For example, the UE may receive configuration information for two or more unified TCI states from a base station (BS). The two or more unified TCI states may include at least one of i) two or more joint TCI states, ii) two or more DL TCI states, and/or iii) two or more UL TCI states.

When the UE is configured, by the base station, with two CORESET pool indexes within a CC/BWP for M-DCI based M-TRP operation, an UL related TCI state (e.g., DL/UL joint TCI state and/or DL/UL separate TCI state) connected/corresponding to each of the two CORESET pool indexes may be configured/indicated. For example, the UE may receive configuration information for a plurality of CORESETs from the base station. CORESETs based on the two CORESET pool indexes may be configured based on the configuration information. The UE may receive, from the base station, information representing two UL related TCI states (e.g., two joint TCI states or two UL TCI states) connected/-corresponding/related to the two CORESET pool indexes. The information representing the two UL related TCI states may be received based on at least one of DCI, MAC CE or RRC message.

Two TRP-specific TA values may be connected/corresponded to the two UL related TCI states. In addition, a power control parameter set configured to each of the two UL related TCI states may be used as a power control parameter set for each target TRP in M-TRP UL transmission (e.g., M-TRP PUSCH/PUCCH repetition) (for S-DCI based M-TRP operation).

Specifically, since UL spatialRelationInfo (UL TCI) information is not applicable in FR1, TCI states for configuring/indicating two TAs/PC parameter sets may be configured/utilized as follows.

Reference RS corresponding to QCL type-D or/and UL spatialRelationInfo (UL TCI) may not be configured to the two TCI states. For example, in each TCI state, a referenceSignal field (within QCL-Info) may not exist. For example, the UE may not expect that the referenceSignal field (within QCL-Info) is configured in each TCI state.

If the reference RS corresponding to QCL type-D or/and UL spatialRelationInfo (UL TCI) is configured to the two TCI states, the UE may skip/ignore/override the reference RS and perform UL transmission using only TA/PC information corresponding to each target TRP (e.g., first/second TCI or CORESET pool index 0/1).

As described above, the UE may determine TA/PC information corresponding to each target TRP (e.g., each TRP among two target TRPs) based on the two TCI states. The UE may perform UL transmission for each target TRP based on the TA information/PC information. An UL transmission timing (e.g., uplink frame) for each target TRP may be determined based on the TA information (e.g., TAG or TA value for TAG). An UL transmission power for each target TRP may be determined based on the PC information (e.g., one or more PC parameters).

The TCI state may be configured/indicated via RRC, MAC CE or/and DCI in the same manner as the existing Rel-17 operation. If the TCI state is indicated via the DCI, the base station may use i) DL(/UL) grant DCI or ii) DL(/UL) grant DCI without data scheduling. The base station may dynamically indicate the TCI state for each target TRP through a TCI field of the DCI. For example, if the TCI indication via the DCI as above is performed in a CORESET with a specific CORESET pool index, the UE may use the corresponding TCI for reception/transmission of DL/UL channel/RS connected/corresponding to the CORESET pool index.

In this instance, according to the Rel-17 standard, in the TCI indication via grant DCI without data scheduling, the UE may transmit Ack (/Nack) after receiving the DCI (via PUCCH and/or PUSCH) (e.g., Use ACK/NACK mechanism analogous to that for SPS PDSCH release with both type-1 and type-2 HARQ-ACK codebook).

If the above operation (i.e., TCI indication via grant DCI without data scheduling) is performed in FR1, the UE may skip Ack (/Nack) transmission. The skip of the Ack (/Nack) transmission takes into account the following technical matters.

In Rel-17, the base station checks whether the UE has received well a TCI state including beam information (e.g., reference RS) for reception/transmission of the UE indicated via the DCI. Thereafter, the base station may use the Tx/Rx beam of the base station corresponding to the indicated TCI information in subsequent DL/UL transmission/reception. On the other hand, an indication for the TCI state not including Tx/Rx beam information of the UE allows the base station to configure/indicate two TAs (e.g., two TAGs or two TAs corresponding to two TAGs) and two PCs (e.g., two parameter sets). Whether the indication for the TAs/PCs has been successfully transmitted may be determined through subsequent transmission of the UE. Specifically, after the base station receives subsequent UL transmission of the UE, the base station may determine whether the TA/PC indication by the preceding DCI has been successfully transmitted to the UE and the UE has performed the UL transmission based on the indication.

Accordingly, the UE may skip the Ack (/Nack) transmission for the indication for the TCI state in FR1 (the indication for the TCI state not including the Tx/Rx beam information of the UE).

In addition, as the Rx/Tx beam indication is dynamically performed in the existing Rel-17 unified TCI framework, a concept such as beam application time (BAT) has been defined to determine at which time the UE should perform change of the corresponding Rx/Tx beam from the time of DCI reception. For example, beamAppTime parameter may be set based on PDSCH-config. The beamAppTime parameter indicates a first slot to which the unified TCI indicated by the DCI is applied. The beamAppTime parameter may indicate the number of symbols (Y) (e.g., n1, n2, n4, n7, n14, n28, n42, n56, n70, n84, n98, n112, n224, n336). The first slot may be a slot which is at least Y symbols after a last symbol of acknowledgement (Ack) of a joint or separate DL/UL beam indication.

As described above, when the unified TCI framework is used to configure/indicate the TA/PC, the BAT may be applied as a setting value for at which time the UL TA/PC should be applied. Or/and, since the TCI state is irrelevant to the beam application, the UE may not expect the BAT to be configured or may expect the BAT value to be set to 0. As a specific example, it may be assumed that unified TCI states for FR1 are indicated by a DCI (e.g., DL grant DCI, UL grant DCI, DCI without DL grant or DCI without UL grant). Since the indicated unified TCI states are irrelevant to the beam application, transmission of HARQ-ACK information for the DCI may be skipped. Since the transmission of the HARQ-ACK information is skipped, a time (e.g., symbol, slot, subframe or frame) for application of the indicated unified TCI states cannot be determined by the beamAppTime parameter. In this case, even if the beamAppTime parameter is configured, the UE may not use the beamAppTime parameter. In other words, the UE may ignore the beamAppTime parameter. For example, the time (e.g., symbol, slot, subframe or frame) for application of the indicated unified TCI states may be determined without applying the beamAppTime parameter. For example, the time for application of the indicated unified TCI states may be determined regardless of the beamAppTime parameter.

Proposal 2

For two TRP-specific TA values or/and two TRP-specific PC parameter sets, a base station may configure separate parameter(s) Specifically, (in FR1 operation) the two TRP-specific TA values or/and the two TRP-specific PC parameter sets may be configured/connected/corresponded to the separately configured parameter(s).

The separate parameter(s) may include a TRP-specific TA value. In this instance, the parameter(s) may be configured as in the following i) or ii).

i) A single parameter including both a first TA value and a second TA value may be configured.

ii) Two parameters may be configured. A first parameter may include the first TA value, and a second parameter may include the second TA value.

The separate parameter(s) may include a TRP-specific PC parameter set. In this instance, the parameter(s) may be configured as in the following i) or ii).

i) A single parameter including both a first PC parameter set and a second PC parameter set may be configured.

ii) Two parameters may be configured. A first parameter may include the first PC parameter set, and a second parameter may include the second PC parameter set.

In the i), a specific CORESET pool index may be connected/corresponded to the specific TA value or/and the specific PC parameter set within the single parameter. For example, CORESET pool index 0 may be connected to the first TA value/first PC parameter set, and CORESET pool index 1 may be connected to the second TA value/second PC parameter set.

In the ii), a specific CORESET pool index may be connected/corresponded to a specific parameter among the two parameters. For example, CORESET pool index 0 may be connected to the first parameter, and CORESET pool index 1 may be connected to the second parameter.

As described above, the first TA value/first PC parameter set and the second TA value/second PC parameter set may be configured to the specific parameter(s) and may be connected to the specific CORESET pool index. A UE may perform UL transmission by utilizing the TRP-specific TA value or/and the TRP-specific PC parameter set connected to the corresponding CORESET pool index upon the UL transmission related/corresponding to the specific CORESET pool index.

For more flexible configuration, the TRP-specific TA values corresponding to the above two TA values or/and the two TRP-specific PC parameter sets may be configured/connected/mapped/updated in each CORESET (group) configuration. Hence, the UE can perform UL transmission by utilizing the TRP-specific TA value or/and the TRP-specific PC parameter set configured to the corresponding CORESET upon the UL transmission related to a specific CORESET (group).

In the above embodiment, the expression "(a specific parameter and another parameter) may be connected/-corresponded" may mean that a specific parameter and another parameter can be associated via RRC/MAC CE/DCI signaling.

Unless embodiments of the proposal 1 and the proposal 2 are mutually exclusive, embodiments of the proposal 1 and embodiments of the proposal 2 can be combined and applied to UE/BS operation. For example, an operation of configuring unified TCI (proposal 1) and an operation of configuring separate parameter(s) (proposal 2) cannot be combined, but other embodiments can be combined and applied. Specifically, embodiments of the proposal 1 and embodiments of the proposal 2 related to two TRP-specific TA values (two TRP-specific PC parameter sets) can be combined and applied to the UE/BS operation.

Multiple TA acquisition

In order for the plurality of TA values described above to be configured, it is necessary to determine how the BS will request/acquire multiple TA values. Hereinafter, a method and terminal operation for the BS/UE to obtain a plurality of TA values are proposed. Specifically, Proposal 3 below proposes a method for the UE to perform two TA acquisitions and a method for configuring the TA in the BS without RACH enhancement, and Proposal 4 proposes a method for the UE to perform two TA acquisitions and a method for configuring the TA in the BS through RACH enhancement.

Hereinafter, the first TA or second TA being connected/corresponding to a specific CORESET pool index may mean that the first TA or/and second TA are connected/corresponding to the first TCI state or/and the second TCI state (for A common beam operation in the unified TCI framework).

Hereinafter, the first TA and the second TA may mean first/second TA values managed for configuring two TRP-specific TA values within a specific TAG (i.e., one TAG). Alternatively, the first TA and the second TA may mean the first TA value and the second TA value that are managed corresponding to different TAGs (first TAG and second TAG) for the same CC (set).

Proposal 3

Hereinafter, a method for performing two TA acquisitions and a method for configuring the TA in the BS without RACH enhancement will be described.

Proposal 3-1

The UE may perform RACH transmission with a single (and/or primary/first) TA in a RACH transmission procedure including an initial access (e.g., PDCCH ordered RACH, RACH transmitted upon TA timer expiration, etc.). The BS may measure the first/second TA by receiving the subsequent SRS of the UE. That is, a method for configuring/indicating an implicit/explicit connection/correspondence relationship between a specific SRS resource (set) and a specific CORESET pool index is proposed.

The following operations may be performed on an aperiodic SRS resource (set) corresponding to dynamic scheduling: The UE may receive SRS triggering DCI in a CORESET having a specific CORESET pool index. At this time, the aperiodic SRS resource (set) transmitted by the UE may be connected/corresponded to the specific CORESET pool index.

The following operations may be performed with respect to periodic/semi-persistent SRS resources (set) transmitted by the UE via RRC/MAC CE signaling. The BS may (explicitly) configure/connect/correspond to an associated CORESET pool index for a specific SRS resource (set). Through this, the UE/BS may know which CORESET pool index a specific SRS resource (set) is connected to/corresponds to.

As a result, the BS/UE may understand that a specific P/SP/AP SRS resource (set) transmitted by the UE is associated with/corresponding to the specific CORESET pool index. In other words, the BS may identify the CORESET pool index associated with/corresponding to the specific P/SP/AP SRS resource (set) transmitted by the UE. The BS may measure the first TA or/and the second TA through the SRS transmitted by the UE.

According to an embodiment, the first(/primary) TA may be acquired through the existing RACH procedure. The second TA may be acquired through the SRS related to CORESET pool index 1 as described above.

Proposal 3-2

The BS may measure the first TA or/and second TA connected/corresponding to the specific CORESET pool index through the proposal 3-1. The BS may configure/indicate TRP-specific TA value (i.e., first/second TA) by utilizing enhanced RAR MAC CE format or/and enhanced TA command MAC CE.

As an example, the BS may configure a target CORESET pool index in the enhanced MAC CE format. Through this, a TA value associated with/corresponding to the corresponding CORESET pool index may be configured/indicated. As a specific example, the enhanced MAC CE format may include a field indicating the target CORESET pool index.

As an example, the BS may configure a first/second TCI corresponding to M / N > 1 for a TRP-specific common beam operation in the enhanced MAC CE format as a target. Through this, the TA value associated with/corresponding to the first/second TCI may be configured/indicated. As a specific example, the enhanced MAC CE format may include a field indicating a target TCI (e.g., first TCI state or second TCI state).

As an example, the BS may configure a specific joint and/or separate UL TCI state(s) index in the enhanced MAC CE format as the target. Through this, a TA value to be applied to the corresponding TCI state(s) may be configured/indicated. Specifically, the TA value in the MAC CE format for configuring/indicating the second TA value may be configured/specified/indicated to have a different TA granularity or/and value range than the first TA value in the same MAC CE format. This is because in the M-TRP operation, a difference in UL TA values of different TRPs may differ by a CP length or more from a DL timing reference. (When using the same number of bits as the first TA value) The granularity of the second TA value may be expressed with a slightly larger step size than that of the first TA value. (When using the same number of bits as the first TA value) The value range of the second TA value may be expressed with a slightly larger value range than that of the first TA value.

As described above, the BS may configure/indicate the first/second TA for the specific target CORESET pool index/target common TCI/target TCI state(s). In the transmission of UL channel/RS (especially SRS in the proposal 3-1) associated with the target CORESET pool index/target common TCI/target TCI state(s), the BS may perform uplink transmission by applying the configured/indicated first/second TA value.

The BS may perform update/activation of the TRP-specific TA value by measuring the TRP-specific SRS transmission of the UE based on Proposal 3-1 after configuring/indicating the TRP-specific TA through Proposal 3-2.

Proposal 4

Hereinafter, a method for performing two TA acquisitions and a method for configuring the TA in the BS without RACH enhancement will be described.

Proposal 4-1

A method for supporting TRP-specific RACH transmission for TRP-specific TA measurement may be considered.

The BS may perform grouping on the SSB (SS/PBCH block) which the UE utilizes for RACH transmission. The BS may associate/correspond a specific SSB group with/to a specific CORESET pool index. For example, SSBs corresponding to SSB indices 0 to 31 may be connected/corresponded to CORESET pool index 0, and SSBs corresponding to SSB indices 32 to 64 may be connected/corresponded to CORESET pool index 1. Here, the SSB index may be an SS/PBCH index of an SS/PBCH block.

Based on the grouping, the BS may configure/indicate to utilize a specific SSB index when configuring/indicating to transmit (PDCCH ordered) RACH to the UE. The RACH may mean a random access preamble. For example, the BS may transmit DCI (e.g., DCI format 1_0) containing information related to a PDCCH order to the UE. A random access procedure is initiated by the PDCCH order. The UE transmits the random access preamble to the BS. The information related to the PDCCH order may include an SS/PBCH index. The SS/PBCH index may be connected to/associated with a specific CORESET pool index The random access preamble may be transmitted based on the SS/PBCH index.

By causing the UE to transmit a RACH corresponding to the SSB (based on the specific SSB index), the BS may measure a TRP-specific TA associated with/corresponding to each CORESET pool index by utilizing the RACH.

According to an embodiment, multiple RACH transmissions may be indicated/scheduled to the UE via a single PDCCH (e.g., single DCI) transmission so that the UE may transmit an RACH associated with each CORESET pool index when the BS indicates (PDCCH ordered) RACH transmission. As a specific example, the single DCI may include information related to PDCCH order. At this time, the information related to the PDCCH order may include two SS/PBCH indices. The UE may transmit two random access preambles to the BS based on the two SS/PBCH indices. Through such a mode, overhead/delay may be reduced with a single PDCCH transmission, and the UE may be instructed to transmit all RACHs destined for each TRP. The BS may perform TA measurements for each TRP at once.

According to an embodiment, a connection/correspondence relationship between the specific SSB group and the specific CORESET pool index may be configured/defined/specified by connecting/corresponding the specific CORESET pool index and the PRACH preamble index/RACH occasion/PRACH mask index. Specifically, DCI (e.g., DCI Format 1_0) related to the PDCCH order may include a Random Access Preamble index, an SS/PBCH index, and a PRACH Mask index. When a value of the RandomAccess Preamble index is not zero, the PRACH Mask index indicates an RACH occasion associated with the SS/PBCH indicated by the SS/PBCH index. The specific CORESET pool index may be configured to be connected/corresponding to at least one of the PRACH preamble index, the PRACH mask index, or the RACH occasion.

Additionally, if a connection/correspondence relationship between a specific SSB group and a specific CORESET pool index is defined/configured, the following operation may be performed. The BS may schedule the RACH transmission of the UE according to the PDCCH order through a CORESET having a specific CORSET pool index. At this time, the UE may perform RACH transmission corresponding to the SSB connected/corresponding to the specific CORESET pool index (or such RACH transmission may be forced) (even if there is no SSB index indication in the corresponding PDCCH). In other words, the UE may perform the RACH transmission based on the CORESET pool index of the CORESET in which the DCI (related to the PDCCH order) is received.

The RACH transmission in Proposal 4-1 above may not be utilized in RACH transmission upon an initial access.

Even if the UE performs TRP-specific RACH transmission as described above, the TA value is not changed during UL transmission in the RA procedure because the UE performs all operations based on a specific SSB in the RA procedure. That is, the UE performs the UL transmission by utilizing the same TA value. The RA procedure may include a 4-step RACH procedure and/or a 2-step RACH procedure. For example, the 4-step RACH procedure (e.g., contention-based RACH) may include operations of transmitting Msg 1 (preamble), receiving Msg 2 (RAR), transmitting Msg 3 (PUSCH), and receiving Msg 4 (contention-resolution). For example, the 2-step RACH procedure may include operations of transmitting Msg A (preamble and PUSCH) and receiving Msg B (RAR).

Proposal 4-2

Hereinafter, a method for managing a TRP-specific TA timer will be described.

According to the existing TA maintenance operation, when a timer corresponding to a Primary Timing Advance Group (PTAG) expires due to timeAlignmentTimer (per TAG), the UE may release the UL transmission and transmit the RACH. The embodiment proposes a method for managing timeAlignmentTimer corresponding to the TA timer to be TRP-specific.

The UE may manage up to two TA timers corresponding to CORESET pool indices 0 and 1 or/and first and second TA values within a single TAG. Here, two respective timers may be timers configured to different TAGs for different TRPs.

According to the existing operation, when the TA timer expires, the UE transmits a RACH corresponding to a random SSB (e.g., an SSB based on one of the SSB indices). On the other hand, according to the embodiment, when a TA timer associated with/corresponding to a specific CORESET pool index or/and a specific first/second TA value expires, the UE may transmit the RACH based on the CORESET pool index associated with/corresponding to the expired TA timer. That is, an RACH corresponding to an SSB that is connected/corresponding to the corresponding CORESET pool index may be transmitted.

Through such an operation, the UE may transmit a RACH for a specific TRP when the TA value corresponding to the TRP has expired. The BS may measure the TA value of the UE from the corresponding TRP and configure/indicate/update the TRP-specific TA value to the UE (as in Proposal 3-2).

In addition, it may be assumed that in the existing operation, when the timer corresponding to the PTAG expires, a UL out of synch (OOS) operation is performed, but in the case where two TRP-specific timers corresponding to the first and second TAs, respectively are managed as in Proposal 4-2 above, one timer expires and the other timer does not expire. In such cases, the UE may not need to perform all of the predefined UL OOS operations (e.g., not perform the RRC release operation, etc.). If both timers expire, all predefined UL OOS operations may need to be performed.

Proposal 4-3

Hereinafter, a method for transmitting, by the BS, an RAR corresponding to TRP-specific RACH transmission will be described.

According to Proposals 4-1 or/and 4-2 above, a specific RACH transmission of the UE corresponds to a specific SSB. Depending on a correspondence relationship between the SSB index and the CORESET pool index, a specific RACH transmission and a specific CORESET pool index may naturally have a correspondence relationship. A method for transmitting, by the BS, the RAR to be TRP-specific with respect to the TRP-specific RACH transmission of the UE is proposed.

The BS may receive a specific RACH that has a correspondence relationship with a specific CORESET pool index. The BS may transmit the RAR for the corresponding RACH to the UE based on some of the CORESETs among the CORESETs having the specific CORESET pool index. As an example, the some CORESETs may be a CORESET having a lowest index among the CORESETs that are configured with the corresponding CORESET pool index.

In the existing standard operation, the UE may receive, from the BS, a configuration for a typel-PDCCH common search space (CSS) set for receiving the RAR. Specifically, the typel-PDCCH CSS set may be configured based on the ra-searchspace of the PDCCH-ConfigCommon IE. For example, the RAR may be received based on monitoring PDCCH candidates in a search space set (SS set).

Proposal 4-3 proposes a method to enable the UE to receive A TRP-specific RAR through a separate UE-specific Search Space (USS) set in addition to the typel-PDCCH CSS set.

According to an embodiment, a method for connecting/configuring a CORESET for receiving the separate USS set and the TRP-specific RAR may be considered. Each USS set may be connected/corresponding to a CORESET with a different CORESET pool index.

According to an embodiment, the BS may transmit an RAR for an RACH for first/primary (and/or corresponding to CORESET pool index 0) TA value measurement through the existing type1-PDCCH CSS set. According to an embodiment, the BS may transmit an RAR for an RACH for first/primary (and/or corresponding to CORESET pool index 1) TA value measurement through the existing type1-PDCCH CSS set. When the USS set is used for TRP-specific RAR reception as described above, a separate RNTI for the TRP-specific RAR reception may be configured in the UE.

According to an embodiment, the UE may receive a TRP-specific RAR based on a configuration of a plurality of CSS sets (e.g., a configuration of two CSS sets considering two TRPs). Each USS set may be connected/corresponding to a CORESET with a different CORESET pool index.

When the separate plurality of CSS sets are configured for TRP-specific RAR reception, a first ra-searchspace corresponding to the first TRP/CORESET pool index 0 and a second ra-searchspace corresponding to the second TRP/CORESET pool index 1 may be configured based on the PDCCH-ConfigCommon IE.

Based on a CORESET configuration connected to/corresponding to the search space being not present in the first ra-searchspace configuration, the UE may assume the following configuration (as a default operation). Specifically, CORESET 0 within the CC/BWP (or a CORESET with a lowest ID among the CORESETs corresponding to the CORESET pool index 0) may be connected to the first ra-searchspace configuration.

Based on a CORESET configuration connected to/corresponding to the search space being not present in the second ra-searchspace configuration, the UE may assume the following configuration (as a default operation). Specifically, CORESET with a lowest ID among CORESETs corresponding to the CORESET pool index 1 within the CC/BWP may be connected to the second ra-searchspace configuration.

A MAC CE format transmitted via such TRP-specific RAR may include all configurations/indications for a plurality of TA values within a specific CC/BWP, as in Proposal 3-2 above. Alternatively, the MAC CE format transmitted via the TRP-specific RAR may only include a configuration/indication for a TA values associated with/corresponding to the CORESET pool index through which the RAR is transmitted.

For a TA value associated/corresponding to a specific CORESET pool index indicated through the MAC CE format, the UE may specify/define a DL timing reference based on the reception of the RAR (UL grant DCI) transmitted in the CORESET having the corresponding CORESET pool index. The UE may apply the TA value indicated from the corresponding DL timing reference. In an M-DCI based M-TRP situation of non-ideal backhaul scenario (e.g., scenario where there is no coordination between TRPs), the DL timing reference between TRPs may be significantly different. In such a case, the BS may indicate, to the UE, an appropriate TRP-specific TA value for each DL timing reference for each TRP through the above-described operation.

Proposal 5

Proposal 5 describes additional embodiments related to Proposal 4. Specifically, hereinafter, i) an embodiment related to the timer related to two TAs of Proposal 4-2, and ii) an embodiment related to the RAR corresponding to the TRP-specific RACH transmission of Proposal 4-1 and the corresponding RACH transmission of Proposal 4-3 will be examined in sequence.

Proposal 5-1

Hereinafter, a method for managing the timer related to two TAs will be described.

In Proposal 4-2 above, a method for managing a TA for each TRP (TRP-specific TA) in a UE-specific CC/BWP of an M-DCI based M-TRP environment is proposed. Specifically, according to Proposal 2, the timer related to each TA is managed separately. A different method than the operation of Proposal 4-2 described above may be considered.

Specifically, according to Proposal 5-1, the above-described UL OOS operation may be performed when a timer of a specific TA value (e.g., the first TA value) among the two TA values is expired. Additionally, the embodiment may assume/consider at least one of the following technical matters.

Among the plurality of TRPs, there may be a primary TRP (e.g., a CORESET pool with CORESET pool index 0) that transmits system information. For example, the specific TA value may be related to the primary TRP (CORESET pool index 0).

2) 2) The second TA value of the second TRP (i.e., the CORESET pool with CORESET pool index 1) may be managed by an offset value from the first TA value of the first TRP (i.e., the CORESET pool with CORESET pool index 0).

Only one timer related to TA may be configured in the UE. For example, a timer (i.e., timeAlignmentTimer) may be configured only for the first TA value. In this case, the UL OOS operation may be performed based on the expiration of the configured timer.

The timer related to each TA may be configured in the UE. That is, timers related to the plurality of TAs may be configured in the UE. For example, the timers (i.e., first and second timeAlignmentTimer) may be configured for the first TA value and second TA, respectively. In this case, the UL OOS operation may be performed based on the expiration of the configured specific timer (first timeAlignmentTimer or second timeAlignmentTimer). The UL OOS operation may be based on the operation performed upon expiration of a timer related to the PTAG (or STAG). For example, the UL OOS action may include actions performed when timeAlignmentTimer is expired in Table 8.

When the timer for a specific TA value (e.g., first TA value) is expired, the UE may perform a release operation for all UL channels/RSs (of the CC/BWP related to the corresponding TA value (or related to the corresponding TAG)). More specifically, the UE may perform the release operation and the clear operation based on Table 8. Based on the expiration of the above-described timer, the UE may i) release the PUCCH and the SRS, and ii) clear a configured downlink assignment, a configured uplink grant, and the PUSCH resource (e.g., PUSCH resource for semi-persistent CSI reporting). Further, the UE may perform the RACH transmission in order to update the expired TA value.

The proposal may be applied to both a case where the first TA and the second TA are managed in one TAG and a case where the first TA and the second TA are managed in two different TAGs.

As an example, timers may be set on both the first TA and the second TA, and a UL OOS operation may be performed when at least one timer is expired. As an example, the UL OOS operation may be performed when a timer of a TA value related to a PTAG is expired. For example, in a specific CC/BWP, a first TA value may correspond to the PTAG, and a second TA value may correspond to an STAG, so in this case, the UL OOS operation may be performed when a timer corresponding to the first TA value is expired.

Hereinafter, embodiments related to an operation of the UE when a timer related to two TAs is expired will be described

Specifically, in a UE-specific CC/BWP (in an M-DCI based M-TRP environment), it may be assumed that two TAs for two TRPs are managed based on two TAGs. Hereinafter, embodiments related to an operation when a time related to a specific TA value (and/or a specific TAG) is expired will be specifically described.

Table 8 shows contents regarding a method of managing a TA by a TimeAlignmentTimer (TAT) in a TAG. Meanwhile, according to a current standardization discussion, two TAGs may be configured to manage two TA values for a specific serving cell(/BWP). In other words, two TAGs belonging to one serving cell may be configured. An agreement according to the standardization discussions is shown in Table 12 below.

[Table 12]

| For multi-DCI based multi-TRP operation with two TAs, support configuring two TAGs belonging to a serving cell. |
| --- |

In this case, the Time Alignment Timer (TAT) may be configured for each TAG of the two TAGs. The TA value within each TAG may be managed by the TAT configured for each TAG.

At this time, if only one of the TATs of each TAG is expired, ambiguity arises as to which of the following operations 1) and 2) the UE should perform.

1) The UE may continue to perform UL/channel/RS transmissions related to the expired TAG (TA value within the expired TAG).

2) The UE may stop the transmission of the UL channel/RS, and release the UL transmission similar to the UL OOS operation.

Here, the UL channel/RS may be related to a CORESET pool (e.g., CORESET pool index 0 or 1) or/and a TRP related to/corresponding to the expired TAG (TA value within the expired TAG).

Embodiments related to solutions to the above-described problems are specifically described in Proposals 5-1a to 5-1c below.

Proposal 5-1a

The UE may perform the transmission of the UL channel/RS related to the TAG whose TAT is expired. As described above, the UL channel/RS may be related to a CORESET pool or/and a TRP related to/corresponding to the TAG whose TAT is expired.

As an example, the base station may configure/schedule the UL channel/RS related to the corresponding CORESET pool or/and TRP (even though the TAT is expired). The UE may perform the UL transmission based on the expired TA for the configured/scheduled UL channel/RS.

As an example, after the UL transmission of the UE, the following operations may be performed. The base station may adjust the UL transmission through an (absolute and/or relative) TAC MAC CE. Specifically, the base station that receives a UL channel/signal based on the expired TAT from the UE may transmit the TAC MAC CE to the UE.

It may be assumed that a UL synch (or UL timing synchronization) is distorted/changed to an extent that it is impossible to adjust the UL transmission via the TAC MAC CE.

As an example, after the UL transmission of the UE, the following operations may be performed. The base station can trigger an RACH (related to the corresponding TAG/CORESET pool index/TRP) through a PDCCH order.

As an example, the base station may not perform subsequent configuration/scheduling for the UL channel/RS related to the CORESET pool index/TRP (if it determines that the UL synch of the UE is broken).

As an example, the base station may perform the configuration/scheduling of the UL channel/RS by utilizing a CORESET of another CORESET pool index. In other words, based on a first TAT being expired among the first TAT and a second TAT, the base station may perform the configuration/scheduling of the UL channel/RS based on the CORESET(s) of the CORESET pool index related to the second TAT.

As an example, the UE may drop the UL channel/RS related to the expired TAT. Specifically, the UL channel/RS related to the expired TAT may be configured/scheduled to the UE by the base station. Since the TAT related to the configured/scheduled UL channel/RS is expired, the UE may override/ignore the configuration/scheduling of the corresponding UL channel/RS. The corresponding UE may drop the transmission of the configured/scheduled UL channel/RS.

Proposal 5-1b

The UE may report, to the base station, information related to a TAG ID whose TAT is expired among the two TAGs. As an example, the UE may transmit, to the base station, the information for the corresponding TAG ID. As an example, the UE may transmit, to the base station, information for a CORESET pool index or/and TRP index related to/corresponding to the corresponding TAG ID.

The UE may report that i) a TAT of a TAG related to a specific TAG-ID or ii) a TAT of a TAG related to a specific CORESET pool index or/and TRP is expired, toward another CORESET pool or/and TRP related to a TAG in which the TAT is not expired. As an example, the UE may transmit, to the base station, information related to an expired TAT (e.g., TAG-ID and/or CORESET pool index) based on the CORESET pool index related to the TAG whose TAT is not expired (or toward the TRP related to the TAG whose TAT is not expired).

As an example, the above-described UE operation s an event-triggered operation based on an expiration of a TAT of a specific TAG, and information related to the expired TAT may be reported through a scheduling request based on a preconfigured PUCCH resource. Hereinafter, the above-described UE operation will be described in detail.

The base station may configure/indicate, to the UE, a scheduling request (SR) resource associated with a specific TAG (i.e., PUCCH resource(s) related to the SR). For example, the scheduling request resource(s) (PUCCH resource(s)) associated with the specific TAG may mean an SR resource (SR-PUCCH resource) in which a transmission beam/power control related to another CORESET pool index other than the CORESET pool index associated with the TAG is configured.

The UE may transmit the SR based on the SR-PUCCH resource associated with/corresponding to the TAG based on the TAT of the specific TAG being expired. As described above, the TAT expiration of the specific TAG may be reported to the base station through the SR transmitted based on the PUCCH resource related to the specific TAG.

The base station that receives a report of the TAT expiration of the specific TAG may perform the following operations. The base station may or may not perform scheduling of a UL channels/RS for the CORESET pool associated with/corresponding to the TAG. When the scheduling of the UL channel/RS is performed, the operation(s) of Proposal 5-1a described above may be performed by the base station/UE after reporting the TAT expiration of the specific TAG.

According to an embodiment the expiration of the TAT of the specific TAG may be reported through RACH transmission. When a TAT of a specific TAG among two TAGs within a CC/BWP is expired, the UE may perform UE-triggered RACH transmission (as in the embodiments of Proposal 4-1 above) by utilizing an RACH-related resource related to the TAG ID (or/and CORESET pool index/TRP index) in which the TAT is expired. In this case, the base station may not only recognize that the TAT of the specific TAG is expired, but also obtain a TA value of the corresponding TAG based on the RACH transmission of the UE. The base station may indicate an updated TA value to the UE through a RAR MAC CE and/or an (absolute and/or relative) TAC MAC CE.

In Proposal 5-1a and Proposal 5-1b, the UE should be able to perform a UL OOS operation (an operation defined in Table 13 below) when the TAT of the specific TAG among two TAGs within the UE CC/BWP is expired. Specifically, the UE should be able to perform the OOS operation for the UL channel/RS related to/corresponding to the CORESET pool index and/or TRP index related to the TAG ID (when the TAT corresponds to/is connected to the PTAG or corresponds to/is connected to the STAG).

However, within a UE CC/BWP in an M-DCI based M-TRP environment, DL reception/UL transmission is performed based on two CORESET pool indices/TRP indices. Therefore, even if a TAT of a specific TAG related to/corresponding to a single CORESET pool index is expired, a UL OOS operation in Table 13 below may not be performed.

[Table 13]

1> when a *timeAlignmentTimer* expires:

2> if the *timeAlignmentTimer* is associated with the PTAG:

3> flush all HARQ buffers for all Serving Cells;

3> notify RRC to release PUCCH for all Serving Cells, if configured,

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain $N_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured,

3> notify RRC to release SRS, if configured;

3> clear any configured downlink assignments and configured uplink grants;

3> clear any PUSCH resource for semi-persistent CSI reporting;

3> maintain $N_{TA}$ (defined in TS 38.211 [8]) of this TAG.

In Proposal 5-1c below, embodiments related to a (CORESET pool/TRP-level) UL OOS operation performed based on a configuration of two TAGs within the CC/BWP are described. Specifically, (1) a case where two TAGs are constituted by PTAGs, (2) a case where two TAGs are constituted by a PTAG and an STAG, and (3) a case where two TAGs are constituted by STAGs are separately described in sequence.

Proposal 5-1c

Hereinafter, UE operations when a TAT corresponding to/connected to a specific (single) TAG within the UE CC/BWP is expired are described in detail.

Proposal 5-1c_(1)

When two TAGs within UE CC/BWP are a combination of PTAG + PTAG

When two TAGs are the combination of PTAG + PTAG, a corresponding cell may be PCell and/or PSCell (SpCel). When two TATs related to two TAGs of the corresponding cell are both expired, the UE may perform all UL OOS operations which should be performed based on the expiration of the TAT of the PTAG in Table 13 above.

When the TAT related to one of the two TAGs is expired, at least one of the operations other than an operation of 'maintaining NTA (defined in TS 38.211 [8]) of this TAG' among the UL OOS operations that should be performed based on the expiration of the TAT of the PTAG in Table 13 may not be performed. As an example, in Table 13, the operation performed based on the expiration of the TAT of the PTAG may be performed based on two TATs being both expired, and when only one TAT is expired, the UE may not perform the corresponding UL OOS operation. As an example, in Table 13, the operation performed based on the expiration of the TAT of the PTAG may be performed based on two TATs being both expired, and when only one TAT is expired, the UE may perform the corresponding UL OOS operation at a TRP-level (e.g., CORESET pool index or TAG).

The above-described embodiment takes into consideration the following technical matters. Since only one of the two TAGs (corresponding to the PTAG) within the CC/BWP is expired, UL transmission of the CC/BWP may be performed (for the other CORESET pool index) by utilizing a TA value of the other TAG. Therefore, there is no need to perform an operation to flush HARQ buffers or to release a UL channels/RS (e.g. PUCCH, SRS). The UE may perform the operations in Table 13 (UL OOS operations) based on two TATs being both expired.

Proposal 5-1c_(2)

When two TAGs within UE CC/BWP are a combination of PTAG + STAG

i) When the TAT related to the PTAG is expired

When the TAT related to the PTAG is expired, the UE may perform all UL OOS operations that should be performed based on the PTAG TAT expiration in Table 13.

ii) When the TAT related to the STAG is expired

When the TAT related to the STAG is expired, the UE may not perform at least one of the operations other than an operation of maintaining NTA (defined in TS 38.211 [8]) of this TAG among the UL OOS operations that should be performed based on the expiration of the TAT of the STAG in Table 13.

The above-described embodiment takes into consideration the following technical matters. Similarly as described in Proposal 5-1c_(1), since only one TAG (STAG) of the two TAGs within the CC/BWP is expired, UL transmission of the CC/BWP may be performed (for the other CORESET pool index) by utilizing a TA value of the other TAG (PTAG).

Proposal 5-1c_(3)

When two TAGs within UE CC/BWP are a combination of STAG + STAG

When two TAGs are the combination of STAG + STAG, a corresponding cell may not be a PCell and/or PSCell (SpCel). When two TATs related to two TAGs of the corresponding cell are both expired, the UE may perform all UL OOS operations which should be performed based on the expiration of the TAT of the STAG in Table 13 above.

When the TAT related to one of the two TAGs is expired, at least one of the operations other than an operation of 'maintaining NTA (defined in TS 38.211 [8]) of this TAG' among the UL OOS operations that should be performed based on the expiration of the TAT of the STAG in the above table may not be performed. Similarly as described in Proposal 5-1c_(1), this is because the UL transmission may be performed based on the TA value of the TAG whose TAT is not expired.

Additional embodiments that may be applied to Proposals 5-1a to 5-1c are specifically described below.

There may be configurations for a primary/first TRP (e.g., CORESET index pool 0 and/or PTAG) and a secondary TRP (e.g., CORESET pool index 1 and/or STAG) within the CC/BWP of the UE.

When a TAT of a TAG related to the primary/first TRP is expired, the UE may not perform the UL OOS operation (related to the PTAG) as shown in Table 13. The UE may perform RACH transmission (or/and SR-PUCCH transmission) for the secondary TRP.

The UE may notify the base station that the TAT of the TAG related to the primary/first TRP is expired based on the RACH transmission (or/and SR-PUCCH transmission).

The base station may i) perform DL/UL transmission/reception using only the secondary TRP or ii) perform a TA acquisition operation to maintain/update the TA value of the TAG related to the primary/first TRP (e.g., transmitting a PDCCH order so that the UE transmits the RACH for the primary/first TRP).

In the embodiments related to Proposals 5-1a to 5-1c above and additional embodiments, the following embodiments may be applied.

When a TAT of a specific TAG (e.g., PTAG or STAG) among two TAGs within CC/BWP is expired, the UE may stop transmission of a configured DL/UL resources associated with/corresponding to the TAG (or/and the CORESET pool index connected to/corresponding to the TAG), or clear the corresponding resource. As an example, the configured DL/UL resource may include at least one of i) configured downlink assignments, ii) configured uplink grants, iii) and/or PUSCH resource for semi-persistent CSI reporting. According to the embodiment, some of the UE operations performed based on an expiration of a TAT of an existing legacy PTAG/STAG are also performed when the TAT of the specific TAG among two TAGs within the CC/BWP is expired. That is, since the TA value of the specific TAG (or/and the CORESET pool index connected/corresponding to the TAG) is invalid, the UE may clear the configured DL/UL resources related to the TAG.

However, the base station may perform the same operation as Proposal 5-1a by performing scheduling for the UE for the DL/UL resources of a dynamic component related to the TAG whose TAT is expired.

In Table 8, an operation is defined whereby a MAC entity stops UL transmission when a timing difference between TAGs associated with a specific MAC entity exceeds a maximum uplink transmission timing difference. The following embodiments may be considered in related to the operation.

According to an embodiment, the UE supporting the two TAs may not perform an operation of stopping the UL transmission. The embodiment takes into consideration the following technical matters. When two TA values are managed/supported (simultaneously or in TDM form) within a specific CC/BWP of the UE, a difference value between the two TAs may exceed the maximum uplink transmission timing difference.

According to an embodiment, when the difference value between the two TAs managed within a specific CC/BWP of the UE exceeds the maximum uplink transmission timing difference (and/or a specific threshold), the UE may operate as follows.

The UE may maintain a primary/first TA value (or/and a value related to the PTAG) among two TA values and a TA timer for the corresponding TA value. The UE may determine that the TAT related to the primary/first TA value (or/and the value related to the PTAG) is not expired. Additionally, the UE may maintain the UL transmission related to the corresponding TA.

The UE may determine that a remaining TA value or/and a TA timer among the two TA values is/are expired. The UE may release UL transmission associated with the other TA value.

The embodiments based on Proposals 5-1c (1) and 5-1c (3) described above are summarized for each serving cell (SpCell or SCell) as shown in Table 14 below.

[Table 14]

| *List the actions to be applied at TAT expiry as follows.* |
| --- |
| 1.  *not perform any uplink transmission except the Random Access Preamble and MSGA transmission;* |
| 2.  *flush all HARQ buffers;* |
| 3.  *notify RRC to release PUCCH, if configured;* |
| 4.  *notify RRC to release SRS, if configured;* |
| 5.  *clear any configured downlink assignments and configured uplink grants;* |
| 6.  *clear any PUSCH resource for semi-persistent CSI reporting;* |
| 7.  *maintain NTA (defined in TS 38.211 [8]) of this TAG;* |
| 8.  *consider all running timeAlignmentTimers as expired.* |
| At least when both TATs for a SpCell are expired, 1-8 are applied to all TRPs of all serving cells. |
| At least when both TATs for a SCell are expired (assuming PTAG(s) of the cell group still running), 1-7 are applied to all TRPs associated to the TAG with the expired TAT (including both TRPs of the concerned SCell). |

Referring to Table 14, operations 1 to 8 correspond to the operations defined in Table 8 and Table 13. As an example, operations 1 to 8 may be performed based on two TATs belonging to the SpCell being expired. As an example, operations 1 to 7 may be performed based on two TATs belonging to the SCell being expired. Since each operation is intended to manage a TRP-specific timing, respective operations may be performed in relation to all TRPs (e.g., all CORESET pool indices) of all serving cells. Here, all serving cells may mean i) all serving cells configured in the UE (in the case of the SpCell) or ii) all serving cells belonging to each TAG (SCell).

Proposal 5-2

Hereinafter, additional embodiments related to 1) TRP-specific RACH transmission operation and 2) RAR MAC CE or/and timing advance command (TAC) MAC CE corresponding to the RACH transmission will be examined.
In Proposal 4-1 above, a method of performing TRP-specific (CORESET pool-specific) RACH transmission by performing grouping on SSB is proposed. In this case, it is possible to perform the TRP-specific RACH transmission by utilizing a specific SSB index in both RACH transmission by higher layer configuration (such as MIB) and PDCCH ordered RACH transmission, and the same operation may be performed when CFRA (Contention Free RandomAccess) transmission is (optionally) configured/indicated in the two RACH transmission methods.
Meanwhile, when CFRA transmission (by PDCCH order) is configured/indicated according to the existing scheme, CFRA resource(s) or CBRA resource(s) may be used. Hereinafter, the details will be explained.

[1] Based on the RSRP of the SSB based on the SSB index configured/indicated for the RACH transmission (e.g., the SSB index indicated based on the DCI related to the PDCCH order) being greater than a specific threshold value (e.g., rsrp-ThresholdSSB), the RACH (or RA preamble) may be transmitted based on the configured/indicated SSB index. More specifically, the RACH (or RA preamble) may be transmitted based on the Contention Free Random Access (CRFA) resource(s) associated with the configured/indicated SSB index.
[2] Based on the RSRP of the SSB based on the SSB index configured/indicated for the RACH transmission (e.g., the SSB index indicated based on the DCI related to the PDCCH order) being smaller than or equal to the specific threshold value (e.g., rsrp-ThresholdSSB), the CBRA resource may be transmitted based on a fall-back operation. The UE may select any SSB. The RACH (or RA preamble) may be transmitted based on the selected SSB. More specifically, the RACH (or RA preamble) may be transmitted based on the Contention Based Random Access (CBRA) resource(s) associated with the selected SSB. In the case of the existing scheme, it may be difficult to obtain a TRP-specific TA because the RACH transmission is performed based on any SSB. For example, another TA other than the TA whose timer being expired may be acquired from the RACH transmission. In this case, it is not efficient in TRP specific TA management.

According to an embodiment, the operations of [1] and [2] may be extensively applied to Proposal 4-1 in order to solve the above-described problem. Specifically, when the CFRA transmission is configured/indicated (in the RACH transmission by the higher layer configuration and the PDCCH ordered RACH transmission), the UE may operate as follows.

[1] Based on the RSRP of the SSB corresponding to the configured/indicated SSB index being greater than a specific threshold value, the UE may operate in the same manner as the existing scheme. That is, the RACH (or RA preamble) may be transmitted based on the configured/indicated SSB index.

[2] Based on the RSRP of the SSB corresponding to the configured/indicated SSB index being smaller than or equal to the specific threshold value, the UE may operate differently from the existing scheme. That is, rather than performing the RACH transmission by selecting any SSB, the UE may perform the RACH (or RA preamble) transmission based on a specific SSB index. The specific SSB index may be one of the SSB indices within an SSB group to which the configured/indicated SSB index belongs. Specifically, the UE may select any SSB (SSB index) within the SSB group that includes/corresponds to the configured/indicated SSB index, and perform the RACH transmission based on the selected SSB index. The RACH (or RA preamble) may be transmitted based on the Contention Based Random Access (CBRA) resource(s) associated with the selected SSB within the SSB group including/corresponding to the configured/indicated SSB index.

According to the above-described embodiment, the following effects are derived.

Even when CFRA-related operation ([1]) falls back to the CBRA-related operations ([2]) through the RSRP-related operations, the UE may perform the RACH transmission for a specific SSB group (connected/corresponding to a specific CORESET pool index) as intended by the original BS. Through the RACH transmission, the BS may obtain a TA value corresponding to a desired TRP. That is, even when the RSRP of the SSB corresponding to the SSB index indicated in relation to the PDCCH order is smaller than or equal to a threshold for utilizing the CFRA resource, the RACH transmission may be performed based on the SSB index for obtaining the TRP-specific TA value other than any SSB index.

According to an embodiment, the following operations may be considered with respect to the RAR for the RACH transmission (RACH transmission based on a specific SSB index belonging to a specific SSB group).

As an example, the RAR for the RACH transmission related to the specific SSB group may be transmitted/received with a specific (same per TRP) RNTI in a specific CSS set as in the existing scheme. In other words, when the BS (UE) receives (transmits) a RACH related to the specific SSB group, the RAR based on the specific RNTI in a specific CSS set may be transmitted (received).

As an example, the RAR for the RACH transmission related to the specific SSB group may be transmitted/received in (SS setoff ) the CORESET(s) in which the CORESET pool index associated with the group is configured as in Proposal 4-3. In other words, when the BS (UE) receives (transmits) the RACH related to the specific SSB group, the RAR may be transmitted (received) in the CORESET(s) (or the SS set of the CORESET(s)) in which the CORESET pool index associated with the group is configured.

According to an embodiment, for the indication of TA associated with/corresponding to each TRP (CORESET pool index) as described in Proposal 4-3 (e.g., indication of two TAs related to two CORESET pool indices), a method of indicating the TA value for each TRP may be considered.

In regard to the operation according to the embodiment, the following technical matters are considered. In the case of assuming non-ideal backhaul situation, which is a main scenario of M-DCI based M-TRP, dynamic-level coordination between two TRPs is not performed in RAR MAC CE and/or timing advance command (TAC) MAC CE transmission. Therefore, indication of the TA value is required for each TRP. Hereinafter, the details will be explained.

As an example, two TAs within a single TAG case may be assumed. In such a case, the following operations may be performed.

TA value indication/update may be performed for a TA value in target TAG based on RAR MAC CE or/and TAC MAC CE associated with each CORESET pool index.

The TA value in the target TAG may be a TA value associated with/corresponding to the corresponding CORESET pool index. Alternatively, the TA value in the target TAG may be a TA value of a sub-TAG (or TASG (TA Sub Group)) associated with/corresponding to the corresponding CORESET pool index. The TA value indication/update may be performed only for the TA value.

As an example, two TAs within two TAGs case may be assumed. That is, it may be assumed that different TAs are based on different TAGs. In such a case, the following operations may be performed.

TA value indication/update may be performed for a TA value corresponding to the TAG associated with the corresponding pool index based on the RAR MAC CE or/and TAC MAC CE associated with each CORESET pool index.

When, in the first example (two TAs within single TAG case) among the above examples, there is a CC/BWP with a single CORESET pool configured within the CC/BWP group (or serving cell group) that constitutes the TAG, ambiguity in the UE operation occurs as to which TA value among the two TA values within the TAG should be used for UL transmission. In such a case, at least one of the following operations i) and/or ii) may be performed.

i) When there is a single pool, the UE may assume the index of the pool as 0. The UE may utilize either the TA value associated with CORESET pool index 0 or the first TA value.

ii) The UE may utilize the set TA value. Specifically, the first or second TA value to be utilized in such a case may be defined/set/indicated in advance or by the BS.

In the two TAs within two TAGs case which is the second example, when the single CORESET pool is configured for a specific CC/BWP (or a specific serving cell) among the intersection CC/BWPs (or intersection serving cells) of the CC/BWP combination forming the first TAG and the CC/BWP combination forming the second TAG (serving cell combination), ambiguity in the UE operation occurs as to which TA value among the TA values by the two TAGs should be used for UL transmission. In such a case, at least one of the following operations i) and/or ii) may be performed.

i) When there is a single pool, the UE may assume the index of the pool as 0. The UE may utilize either the TA value corresponding to the TAG associated with CORESET pool index 0 or utilize a TA value corresponding to the first TAG.
ii) The UE may utilize the set TA value. Specifically, the first or second TAG to be utilized in such a case may be defined/set/indicated in advance or by the BS.
iii) In the BS/UE configuration, the first TAG and the second TAG may be forced to include the same CC/BWP combination.

In the description, the TAC MAC CE may include both absolute TAC and relative TAC by the offset value.
The embodiments of Proposals 1 to 5 described above are applicable to an intra-cell M-DCI based M-TRP environment and an inter-cell M-DCI based M-TRP environment. That is, the operation of performing SSB grouping by CORESET pool index in Proposal 4 and Proposal 5 to enable TRP-specific RACH transmission can be extended to the operation of performing TRP (CORESET pool index or cell)-specific RACH transmission by dividing SSB into two groups based on the following i) and ii).

i) SSB group of serving cell (in inter-cell M-DCI operation)
ii) Inter-cell SSB group configured for non-serving cell (neighbour cell)

Further, the TRP-specific RAR or/and TRP-specific TAC MAC CE operations in Proposal 4 and Proposal 5 may also be extensively applied in the inter-cell M-DCI based M-TRP environment.
The embodiments of Proposals 3 and 5 may be applied to the BS/UE operations in combination with the embodiments of Proposal 1 and the embodiments of Proposal 2, as long as the embodiments are not mutually exclusive. For example, the operation of performing two TA acquisitions without RACH enhancement (Proposal 3) and the operation of performing two TA acquisitions with RACH enhancement (Proposals 4 and 5) may not be combined, but other embodiments may be combined and applied. Specifically, the embodiments of Proposal 3 and the embodiments of Proposals 4 and 5 associated with two TRP-specific TA values may be combined and applied to the UE/BS operations.
Hereinafter, the signaling procedure based on the above-described embodiments will be specifically described.
An example of the UE (or BS) operation based on at least one of the embodiments described above (e.g. at least one of Proposals 1 to 5) is as follows.

1) The UE receives (transmits) unified TCI-related configuration information or/and TRP-specific TA/PC-related configuration information.

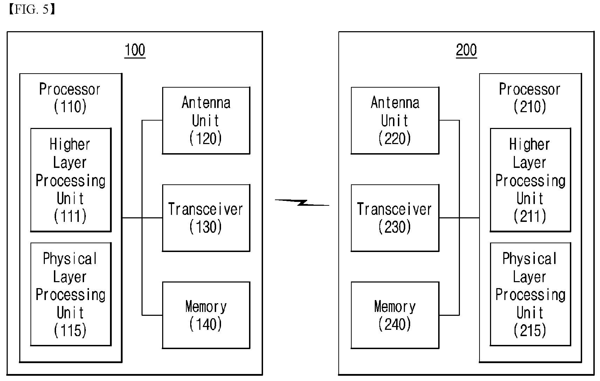

The configuration information may be based on the contents in Proposals 1 to 5.
The UE transmits (receives) the SRS or/and RACH based on Proposal 3 or Proposal 5 according to the BS configuration.
The BS may receive the SRS or/and RACH and measure the TRP-specific TA, and then configure /indicate the TRP-specific TA value to the UE through (RAR or/and TA command) MAC CE based on Proposal 3 or Proposal 5.
2) The UE receives (transmits) a message for scheduling TRP-specific UL transmission.
The above message may be based on at least one of the first PDCCH (first DCI) and/or the second PDCCH (first DCI).
The message may be associated with a specific CORESET pool index or/and a specific CORESET (group).
3) The UE transmits (receives) a UL channel/RS using TRP-specific TA/PC configuration information based on the message.
The UL channel/RS may be based on at least one of SRS, PUSCH, PUCCH or random access preamble, and the UL channel/RS transmission may be performed based on the contents of Proposals 1 to 5.
4) The UE may manage the TRP-specific TA timer based on the contents of Proposals 4 and 5.
The UE/BS operations are only examples, and each operation (or step) is not necessarily required, and operations related to uplink transmission using the TRP-specific TA/PC of the UE according to the above-described embodiments may be omitted or added depending on the UE/BS implementation scheme.
In terms of implementation, the operations (e.g., operations related to uplink transmission utilizing TRP-specific TA/PC of the UE based on at least one of Proposals 1 to 5) of the BS/UE according to the above-described embodiments may be processed by apparatuses (e.g., 5 and 110) in FIG. 5 to be described below.

Further, the operations (e.g., operations related to uplink transmission using TRP-specific TA/PC of a terminal based on at least one of Proposals 1 to 5) of the BS/UE according to the above-described embodiment may be stored in memories (e.g., 140 and 204 in FIG. 5) in the form of an instruction/program (e.g., instruction or executable code) for driving at least one processor (e.g., 110 and 210 in FIG. 5).

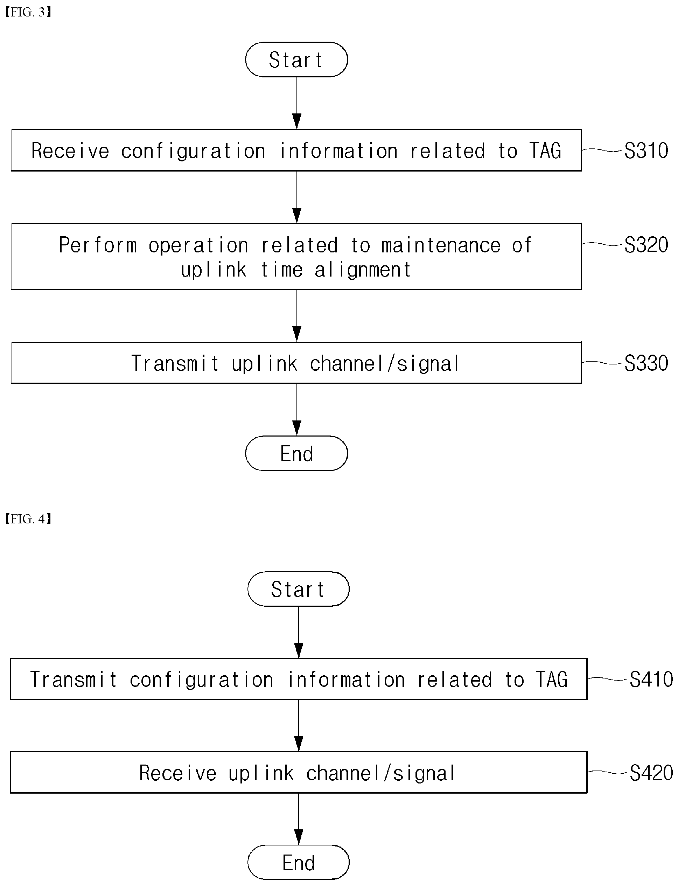

Hereinafter, the above-described embodiments will be described in detail with reference to FIGS. 3 and 4 in terms of the operations of the UE and the BS. Methods to be described below are just distinguished for convenience and it is needless to say that some components of any one method may be substituted with some components of another method or may be applied in combination with each other.

FIG. 3 is a flowchart for describing a method performed by the UE in the wireless communication system according to an embodiment of the present disclosure.

Referring to FIG. 3, a method performed by the UE in the wireless communication system according to an embodiment of the present disclosure includes a step (S310) of receiving configuration information related to a TAG, a step (S320) of performing an operation related to maintenance of uplink time alignment, and a step (S330) of transmitting an uplink channel/signal.

In S310, the UE receives, from the BS, configuration information related to a timing advance group (TAG). The configuration information may include information for a time alignment timer related to the TAG. As an example, the configuration information may be configuration information (e.g., TAG-Config) based on Table 7 above.

According to an embodiment, the TAG may include a first TAG and a second TAG belonging to a serving cell. The configuration information may include information for i) a first time alignment timer related to the first TAG and ii) a second time alignment timer related to the second TAG. The serving cell may be a special cell (SpCell) or a secondary cell (SCell).

According to an embodiment, each TAG may be a primary TAG (PTAG) or a secondary TAG (STAG). As an example, the first TAG may be a first PTAG and the second TAG may be a second PTAG. As an example, the first TAG may be a first STAG, and the second TAG may be a second STAG.

In S320, the UE performs an operation related to a maintenance of an uplink time alignment based on the time alignment timer. Specifically, the UE may perform the operations defined in Table 8. As an example, the UE may perform an operation based on whether the time alignment timer being expired.

According to an embodiment, the OOS operation based on Table 13 may be performed based on two time alignment timers being all expired. The embodiment may be based on Proposal 5-1c.

Specifically, based on the first time alignment timer and the second time alignment timer being expired, operations of

 i) flushing of all HARQ buffers,
 ii) releasing a configured physical uplink control channel (PUCCH),
 iii) releasing a configured sounding reference signal (SRS),
 iv) clearing configured downlink assignments and configured uplink grants,
 v) clearing a physical uplink shared channel (PUSCH) resource for semi-persistent CSI reporting, and
 vi) maintaining $N_{TA}$ of each TAG may be performed.

As an example, the operations i) to vi) above may be performed for all TRPs of all serving cells (e.g., all CORESET pool indices).

Additionally, when two time alignment timers are both expired, the UE may not perform uplink transmission even for any serving cell. As an example, any uplink transmission other than a random access preamble transmission and a MsgA transmission may not be performed based on the first time alignment timer and the second time alignment timer being expired. The random access preamble transmission and the MsgA transmission may be related to an SpCell or SCell.

The UE may transmit the uplink channel/signal while at least one of the first time alignment timer and the second time alignment timer is running. As an example, the uplink transmission may mean an uplink transmission related to all serving cells (e.g., when the serving cell is the SpCell). As an example, the uplink transmission may be an uplink transmission related to serving cells belonging to the first TAG and serving cells belonging to the second TAG (e.g., when the serving cell is the SCell).

As an example, when only one of the two time alignment timers is expired, at least one of the operations i) to vi) may not be performed. In other words, when only one of the two time alignment timers is expired, at least one of the operations i) to vi) (or at least one of operations 1 to 7 in Table 14) may not be performed. Specifically, based on the first time alignment timer or the second time alignment timer being expired, at least one of the operations i) to vi) may be performed.

At this time, at least one of the operations i) to vi) may be performed at the TRP level. As an example, at least one of the operations i) to vi) (or at least one of the operations 1 to 7 in Table 14) may be performed for a transmission and reception point (TRP) related to the expired timer. As an example, at least one of the operations i) to vi) may be performed based on the CORESET pool index related to the expired timer. As an example, at least one of the operations i) to vi) may be performed for the TAG related to the expired timer.

Additionally, any uplink transmission other than the random access preamble transmission and the MsgA transmission may not be performed based on the first time alignment timer or the second time alignment timer being expired. At this time, the uplink transmission may mean an uplink transmission for the TRP related to the expired uplink alignment timer or an uplink transmission based on the TAG related to the expired uplink alignment timer. That is, the UE may perform the uplink transmission based on an uplink timing for a TAG related to an uplink alignment timer which is not expired.

The $N_{TA}$ may be related to a calculation of a timing advance (TA). The $N_{TA}$ may be based on the description in Table 1.

According to an embodiment, the first/second TAG may be a PTAG. In this case, the operation based on Proposal 5-1c_(1) may be performed. Specifically, based on the first TAG being a first PTAG and the second TAG being a second PTAG, the operations i) to vi) performed upon the expirations of the first time alignment timer and the second time alignment timer may be performed for all serving cells, and it may be regarded that all running time alignment timers are expired.

Further, the UE may not also perform any uplink transmission other than the random access preamble transmission and the MsgA transmission for all serving cells or the serving cells.

According to an embodiment, the first/second TAG may be an STAG. In this case, the operation based on Proposal 5-1c_(3) may be performed. Specifically, based on the first TAG being a first STAG and the second TAG being a second STAG, the operations i) to vi) performed upon the expirations of the first time alignment timer and the second time alignment timer may be performed for serving cells belonging to the first STAG and serving cells belonging to the second STAG.

Further, the UE may not also perform any uplink transmission other than the random access preamble transmission and the MsgA transmission for the serving cells belonging to the first STAG and the serving cells belonging to the second STAG.

According to an embodiment, when only one of the two time alignment timers is expired, information for the expired timer may be reported. Specifically, the method may further include a step of transmitting information related to the expired time alignment timer. Based on the first time alignment timer or the second time alignment timer being expired, the UE may transmit the information related to the expired time alignment timer to the base station. The embodiment may be based on Proposal 5-1b. The step of transmitting the information related to the expired time alignment timer may be performed before S330.

the information related to the expired time alignment timer may include at least one of i) an ID of the first TAG or the second TAG, ii) a first CORESET pool index related to the first TAG or a second CORESET pool index related to the second TAG, and/or iii) an ID of a transmit and reception point (TRP) associated with the first TAG or the second TAG.

The information related to the expired time alignment timer may be transmitted based on a first uplink resource or a second uplink resource. The first uplink resource may be related to an expiration of the first time alignment timer. The second uplink resource may be related to an expiration of the second time alignment timer.

The first uplink resource may be related to a second CORESET pool index. The second uplink resource may be related to a first CORESET pool index.

That is, the first/second uplink resource may be a resource in which information related to a beam directed to a TRP related to a TAG in which a time alignment timer is not expired is configured. As an example, based on the first time alignment timer (second time alignment timer) related to a first TRP (second TRP) being expired, the UE may transmit the information related to the expired time alignment timer based on a spatial domain transmission filter related to a second uplink resource (first uplink resource). The spatial domain transmission filter related to a second uplink resource (first uplink resource) may be determined based on information (UL TCI state and joint TCI state) related to the second CORESET pool index (first CORESET pool index).

In S330, the UE transmits, to the base station, an uplink channel/signal based on an uplink transmission timing for the TAG.

According to an embodiment, the uplink channel/signal may mean an uplink channel/signal configured/scheduled by the base station. Specifically, the uplink channel/signal may include i) a first uplink channel/signal transmitted based on an uplink timing for the first TAG and/or ii) a second uplink channel/signal transmitted based on an uplink timing for the second TAG.

The first uplink channel/signal may be i) a first PUSCH, ii) a first PUCCH, or iii) a first SRS. The second uplink channel/signal may be i) a second PUSCH, ii) a second PUCCH, or iii) a second SRS.

According to an embodiment, the operation based on Proposal 5-1a may be performed based on one of two time alignment timers being expired. Hereinafter, the above-described operation will be described in detail.

As an example, the base station may not configure/schedule, to the UE, a UL channel/RS related to an expired time alignment timer. The embodiment may be based on Proposal 5-1a. Specifically, based on the first time alignment timer or the second time alignment timer being expired, the uplink channel/signal may be the second uplink channel/signal or the first uplink channel/signal.

As an example, transmission of the uplink channel/signal related to the expired time alignment timer among the uplink channels/signals configured/scheduled by the base station may be dropped. Specifically, based on the first time alignment timer or the second time alignment timer being expired, the first uplink channel/signal or the second uplink channel/signal may be dropped.

As an example, the UE may also transmit the UL channel/RS related to the expired time alignment timer. That is, the base station may receive, from the UE, the UL channels/RSs related to two time alignment timers. Afterwards, the base station may transmit a MAC CE to the UE for timing adjustment for the TAG related to the expired time alignment timer. Specifically, the method may further include an MAC CE receiving step. The MAC CE receiving step may be performed before S330.

Based on i) the first time alignment timer or the second time alignment timer being expired, and ii) the first uplink channel/signal and the second uplink channel/signal being transmitted, the UE receives a timing advance command medium access control (MAC) control element (CE) (MAC CE) from the base station. The timing advance command MAC CE may be related to the first TAG or the second TAG.

The timing advance command MAC CE (e.g., FIG. 2) includes a timing advance command field. The timing advance command field indicates an index related to timing adjustment (see FIG. 1, Table 4, and Table 5). The index related to the timing adjustment may mean an index value TA of Tables 4 and 5. NTA for calculating the timing advance (TA) may be indicated based on the index related to the timing adjustment. The TA may mean $T_{TA}$ in Table 1. The TA may be a TRP specific TA (e.g., a first TA or a second TA). Specifically, the TA may be related to a first TAG or a second TAG.

As an example, the UE may also transmit the UL channel/RS related to the expired time alignment timer. That is, the base station may receive, from the UE, the UL channels/RSs related to two time alignment timers. The base station may indicate, to the UE, initiating a RACH procedure to obtain a new TA value for the TAG related to the expired time alignment timer. Specifically, the method may further include a step of receiving a DCI. The DCI receiving step may be performed after S330.

Based on i) the first time alignment timer or the second time alignment timer being expired, and ii) the first uplink channel/signal and the second uplink channel/signal being transmitted, the UE receives downlink control information (DCI) from the base station. The DCI includes information related to a physical downlink control channel (PDCCH) order. A random access procedure may be initiated by the PDCCH order.

The DCI may include a synchronization signal/physical broadcast channel block index (SSB index) related to the PDCCH order. Here, the SSB index may be an SS/PBCH index of an SS/PBCH block. The SSB index related to the PDCCH order may be included in i) a first SSB group related to the first CORESET pool index and ii) a second SSB group related to the second CORESET pool index. Each SSB group may be based on a group based on Proposal 4-1 above. As an example, the first SSB group may include one or more first SSBs belonging to SSB indices 0 to 31, and the second SSB group may include one or more second SSBs belonging to SSB indices 32 to 63.

For example, the DCI may be DCI format 1_0. The DCI format 1_0 may include an SS/PBCH index field. The SS/PBCH index field may indicate an SS/PBCH (or SSB index) used to determine a RACH occasion for PRACH transmission (i.e., random access preamble transmission).

As an example, the random access procedure may be initiated by the PDCCH order to establish the timing advance for the first TAG or the second TAG. As an example, the random access procedure may be a Type-1 random access procedure (4-step RA) or a Type-2 random access procedure (2-step RA).

The Type-1 random access procedure may include transmission of a random access preamble (Msg1) on a physical random access channel (PRACH), reception of a random access response (RAR) (Msg2), transmission of a PUSCH scheduled by an UL grant of the RAR (Msg3), and transmission of a PDSCH for contention resolution (Msg4). When the random access procedure is a contention-free random access (CFRA), the Msg3 transmission and Msg4 reception operations are omitted.

The Type-2 random access procedure may include transmission of a random access preamble and PUSCH (MsgA) and reception of a RAR (MsgB).

The method may further include a random access preamble transmitting step. In the step, the UE transmits a random access preamble to the base station. The random access preamble may be transmitted based on a random access procedure (e.g., 4-step RA or 2-step RA) initiated by the PDCCH order. As an example, the random access preamble may be based on Msg1 of the Type-1 random access procedure or MsgA of the Type-2 random access procedure. The random access preamble transmitting step may be performed after S330.

According to an embodiment, the random access preamble may be transmitted based on the SSB index related to the PDCCH order or a specific SSB index. The embodiment may be based on Proposal 5-2 above.

According to an embodiment, the UE that supports two TAGs belonging to the serving cell may not perform the operation related to the maximum uplink transmission timing difference in Table 8. That is, this is because a timing difference between TAGs related to TRPs may exceed the maximum uplink transmission timing difference. Specifically, regardless of whether a timing difference between the first TAG and the second TAG exceeds a maximum uplink transmission timing difference related to a stop of an uplink transmission, the uplink channel/signal may be transmitted.

The method may further include a step of receiving configuration information related to CORESETs. Specifically, the UE receives configuration information related to a plurality of control resource sets (CORESETs) from the base station. CORESETs based on a first CORESET pool index and a second CORESET pool index may be configured based on the configuration information related to the CORESETs.

The step of receiving the configuration information related to the CORESETs may be performed before S310.

According to an embodiment, the first TAG may be associated with the first CORESET pool index and the second TAG may be associated with the second CORESET pool index.

The operations based on S310 to S330, the step of transmitting the information related to the expired time alignment timer, the MAC CE receiving step, the DCI receiving step, the random access preamble transmitting step, and the step of receiving the configuration information related to the CORESETs described above may be implemented by the device in FIG. 5. For example, the UE 200 may control one or more transceivers 230 and/or one or more memories 240 so as to perform the operations based on S310 to S330, the step of transmitting the information related to the expired time alignment timer, the MAC CE receiving step, the DCI receiving step, the random access preamble transmitting step, and the step of receiving the configuration information related to the CORESETs.

Hereinafter, the embodiments described above will be specifically described in terms of the operation of the base station.

Steps S410 to S420, a step of receiving the information related to the expired time alignment timer, an MAC CE transmitting step, a DCI transmitting step, a random access preamble receiving step, and a step of transmitting the configuration information related to the CORESETs described below correspond to steps S310 to S330, the step of transmitting the information related to the expired time alignment timer, the MAC CE receiving step, the DCI receiving step, the random access preamble transmitting step, and the step of receiving the configuration information related to the CORESETs described in FIG. 3. By considering the correspondence relationship, redundant descriptions are omitted. That is, a specific description of the base station operation described below may be replaced with the description/embodiment of FIG. 3 corresponding to the corresponding operation.

As an example, the description/embodiments of S310 to S330 of FIG. 3 may be additionally applied to the base station operations of S410 and S420 described below.

As an example, the description/embodiments of the step of transmitting the information related to the expired time alignment timer, the MAC CE receiving step, the DCI receiving step, the random access preamble transmitting step, and the step of receiving the configuration information related to the CORESETs may be additionally applied to the base station operations of the step of receiving the information related to the expired time alignment timer, the MAC CE transmitting step, the DCI transmitting step, the random access preamble receiving step, and the step of transmitting the configuration information related to the CORESETs described below.

FIG. 4 is a flowchart for describing a method performed by the base station the wireless communication system according to another embodiment of the present disclosure.

Referring to FIG. 4, a method performed by the BS in the wireless communication system according to another embodiment of the present disclosure includes a step (S410) of transmitting configuration information related to a TAG and a step (S420) of receiving an uplink channel/signal.

In S410, the base station transmits, to the UE, configuration information related to a timing advance group (TAG). The UE performs an operation related to a maintenance of an uplink time alignment based on the time alignment timer.

The method may further include a step of receiving information related to an expired time alignment timer. Based on the first time alignment timer or the second time alignment timer being expired, the base station may receive the information related to the expired time alignment timer from the UE. The step of receiving the information related to the expired time alignment timer may be performed after S410 or before S420.

In S420, the base station receives, from the UE, an uplink channel/signal transmitted based on an uplink transmission timing for the TAG.

The method may further include an MAC CE transmitting step. The MAC CE transmitting step may be performed after S420.

Based on i) the first time alignment timer or the second time alignment timer being expired, and ii) the first uplink channel/signal and the second uplink channel/signal being received, the base station transmits, the UE, a timing advance command medium access control (MAC) control element (CE) (MAC CE).

The method may further include a DCI transmitting step. The DCI transmitting step may be performed after S420.

Based on i) the first time alignment timer or the second time alignment timer being expired, and ii) the first uplink channel/signal and the second uplink channel/signal being received, the base station transmits downlink control information (DCI) to the UE.

The method may further include a random access preamble receiving step. In the above step, the base station receives a random access preamble from the UE. The random access preamble receiving step may be performed after S420.

The method may further include a step of transmitting configuration information related to CORESETs. Specifically, the base station transmits configuration information related to a plurality of control resource sets (control resource sets (CORESETs)) to the UE. CORESETs based on a first CORESET pool index and a second CORESET pool index may be configured based on the configuration information related to the CORESETs.

The step of transmitting the configuration information related to the CORESETs may be performed before S410.

The operations based on S410 and 420, the step of receiving the information related to the expired time alignment timer, the MAC CE transmitting step, the DCI transmitting step, the random access preamble receiving step, and the step of transmitting the configuration information related to the CORESETs described above may be implemented by the device in FIG. 5. For example, the base station 100 may control one or more transceivers 130 and/or one or more memories 140 so as to perform the operations based on S410 and 420, the step of receiving the information related to the expired time alignment timer, the MAC CE transmitting step, the DCI transmitting step, the random access preamble receiving step, and the step of transmitting the configuration information related to the CORESETs.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

    receiving, from a base station, configuration information related to a timing advance group (TAG), wherein the configuration information includes information for a time alignment timer related to the TAG;
    performing an operation related to a maintenance of an uplink timing alignment based on the time alignment timer, and
    transmitting, to the base station, an uplink channel/signal based on an uplink transmission timing for the TAG, wherein the TAG includes a first TAG and a second TAG belonging to a serving cell,
    wherein the configuration information includes information for i) a first time alignment timer related to the first TAG and ii) a second time alignment timer related to the second TAG,
    wherein each TAG is a primary TAG (PTAG) or a secondary TAG (STAG), and
    wherein based on the first time alignment timer and the second time alignment timer being expired, operations of

        i) flushing of all HARQ buffers,
        ii) releasing a configured physical uplink control channel (PUCCH),
        iii) releasing a configured sounding reference signal (SRS),
        iv) clearing configured downlink assignments and configured uplink grants,
        v) clearing a physical uplink shared channel (PUSCH) resource for semi-persistent CSI reporting, and
        vi) maintaining $N_{TA}$ of each TAG are performed.

2. The method of claim 1, wherein based on the first time alignment timer and the second time alignment timer being expired, no uplink transmission is performed except for a random access preamble transmission and a MsgA transmission.

3. The method of claim 1, further comprising:

    receiving configuration information related to a plurality of control resource sets (CORESETs),
    wherein CORESETs based on a first CORESET pool index and a second CORESET pool index are configured based on the configuration information related to the CORESETs.

4. The method of claim 3, wherein the first TAG is associated with the first CORESET pool index and the second TAG is associated with the second CORESET pool index.

5. The method of claim 1, further comprising:
    based on the first time alignment timer or the second time alignment timer being expired, transmitting information related to the expired time alignment timer.

6. The method of claim 5, wherein the information related to the expired time alignment timer includes at least one of i) an ID of the first TAG or the second TAG, ii) a first CORESET pool index related to the first TAG or a second CORESET pool index related to the second TAG, and/or iii) an ID of a transmit and reception point (TRP) associated with the first TAG or the second TAG.

7. The method of claim 5, wherein the information related to the expired time alignment timer is transmitted based on a first uplink resource or a second uplink resource,

wherein the first uplink resource is related to an expiration of the first time alignment timer, and the second uplink resource is related to an expiration of the second time alignment timer, and

wherein the first uplink resource is related to the second CORESET pool index, and the second uplink resource is related to the first CORESET pool index.

8. The method of claim 1, wherein the uplink channel/signal includes i) a first uplink channel/signal transmitted based on an uplink timing for the first TAG and/or ii) a second uplink channel/signal transmitted based on an uplink timing for the second TAG.

9. The method of claim 8, wherein the first uplink channel/signal is i) a first PUSCH, ii) a first PUCCH, or iii) a first SRS, and wherein the second uplink channel/signal is i) a second PUSCH, ii) a second PUCCH, or iii) a second SRS.

10. The method of claim 8, wherein based on the first time alignment timer or the second time alignment timer being expired, the first uplink channel/signal or the second uplink channel/signal is dropped.

11. The method of claim 8, further comprising:

based on i) the first time alignment timer or the second time alignment timer being expired, and ii) the first uplink channel/signal and the second uplink channel/signal being transmitted, receiving a timing advance command medium access control (MAC) control element (CE) (MAC CE),

wherein the timing advance command MAC CE is related to the first TAG or the second TAG.

12. The method of claim 8, further comprising:

based on i) the first time alignment timer or the second time alignment timer being expired, and ii) the first uplink channel/signal and the second uplink channel/signal being transmitted, receiving downlink control information (DCI),

wherein the DCI includes information related to a physical downlink control channel (PDCCH) order, and a random access procedure is initiated by the PDCCH order.

13. The method of claim 8, wherein based on the first time alignment timer or the second time alignment timer being expired, the uplink channel/signal is the second uplink channel/signal or the first uplink channel/signal.

14. The method of claim 1, wherein based on the first TAG being a first PTAG and the second TAG being a second PTAG, the operations i) to vi) performed based on the expirations of the first time alignment timer and the second time alignment timer are performed for all serving cells, and it is regarded that all running time alignment timers are expired.

15. The method of claim 1, wherein based on the first TAG being a first STAG and the second TAG being a second STAG, the operations i) to vi) performed based on the expirations of the first time alignment timer and the second time alignment timer are performed for serving cells belonging to the first STAG and serving cells belonging to the second STAG.

16. The method of claim 1, wherein regardless of whether a timing difference between the first TAG and the second TAG exceeds a maximum uplink transmission timing difference related to a stop of an uplink transmission, the uplink channel/signal is transmitted.

17. The method of claim 1, wherein the $N_{TA}$ is related to a calculation of a timing advance (TA).

18. The method of claim 1, wherein the serving cell is a special cell (SpCell) or a secondary cell (SCell).

19. The method of claim 1, wherein based on the first time alignment timer or the second time alignment timer being expired, at least one of the operations i) to vi) is performed.

20. A user equipment (UE) operating in a wireless communication system, the UE comprising:

one or more transceivers;
one or more processors; and
one or more memories operably connectable to the one or more processors, and storing instructions of configuring the one or more processors to perform operations based on being executed by the one or more processors,
wherein the operations include
receiving, from a base station, configuration information related to a timing advance group (TAG), wherein the configuration information includes information for a time alignment timer related to the TAG,
performing an operation related to a maintenance of an uplink timing alignment based on the time alignment timer, and
transmitting, to the base station, an uplink channel/signal based on an uplink transmission timing for the TAG, wherein the TAG includes a first TAG and a second TAG belonging to a serving cell,
wherein the configuration information includes information for i) a first time alignment timer related to the first TAG and ii) a second time alignment timer related to the second TAG,
wherein each TAG is a primary TAG (PTAG) or a secondary TAG (STAG), and
wherein based on the first time alignment timer and the second time alignment timer being expired, operations of

i) flushing of all HARQ buffers,
ii) releasing a configured physical uplink control channel (PUCCH),
iii) releasing a configured sounding reference signal (SRS),
iv) clearing configured downlink assignments and configured uplink grants,
v) clearing a physical uplink shared channel (PUSCH) resource for semi-persistent CSI reporting, and
vi) maintaining $N_{TA}$ of each TAG are performed.

21. A device comprising: one or more memories and one or more processors functionally connected to the one or more memories,

wherein the one or more memories include instructions of configuring the one or more processors to perform operations based on being executed by the one or more processors, and
wherein the operations include
receiving, from a base station, configuration information related to a timing advance group (TAG), wherein the configuration information includes information for a time alignment timer related to the TAG,
performing an operation related to a maintenance of an uplink timing alignment based on the time alignment timer, and transmitting, to the base station, an uplink channel/signal based on an uplink transmission timing for the TAG, wherein the TAG includes a first TAG and a second TAG belonging to a serving cell,
wherein the configuration information includes information for i) a first time alignment timer related to the first TAG and ii) a second time alignment timer related to the second TAG,
wherein each TAG is a primary TAG (PTAG) or a secondary TAG (STAG), and
wherein based on the first time alignment timer and the second time alignment timer being expired, operations of

i) flushing of all HARQ buffers,
ii) releasing a configured physical uplink control channel (PUCCH),
iii) releasing a configured sounding reference signal (SRS),
iv) clearing configured downlink assignments and configured uplink grants,
v) clearing a physical uplink shared channel (PUSCH) resource for semi-persistent CSI reporting, and
vi) maintaining $N_{TA}$ of each TAG are performed.

22. One or more non-transitory computer-readable media storing one or more instructions, wherein one or more instructions executable by one or more processors configure the one or more processors to perform operations, and

wherein the operations include
receiving, from a base station, configuration information related to a timing advance group (TAG), wherein the configuration information includes information for a time alignment timer related to the TAG,
performing an operation related to a maintenance of an uplink timing alignment based on the time alignment timer, and transmitting, to the base station, an uplink channel/signal based on an uplink transmission timing for the TAG, wherein the TAG includes a first TAG and a second TAG belonging to a serving cell, wherein the configuration information includes information for i) a first time alignment timer related to the first TAG and ii) a second time alignment timer related to the second TAG, wherein each TAG is a primary TAG (PTAG) or a secondary TAG (STAG), and wherein based on the first time alignment timer and the second time alignment timer being expired, operations of

i) flushing of all HARQ buffers,
ii) releasing a configured physical uplink control channel (PUCCH),
iii) releasing a configured sounding reference signal (SRS),
iv) clearing configured downlink assignments and configured uplink grants,
v) clearing a physical uplink shared channel (PUSCH) resource for semi-persistent CSI reporting, and
vi) maintaining $N_{TA}$ of each TAG are performed.

23. A method performed by a base station in a wireless communication system, the method comprising:

transmitting, to a user equipment (UE), configuration information related to a timing advance group (TAG), wherein the configuration information includes information for a time alignment timer related to the TAG, wherein an operation related to a maintenance of an uplink timing alignment based on the time alignment timer is performed by the UE; and receiving, from the UE, an uplink channel/signal transmitted based on an uplink transmission timing for the TAG, wherein the TAG includes a first TAG and a second TAG belonging to a serving cell, wherein the configuration information includes information for i) a first time alignment timer related to the first TAG and ii) a second time alignment timer related to the second TAG, wherein each TAG is a primary TAG (PTAG) or a secondary TAG (STAG), and wherein based on the first time alignment timer and the second time alignment timer being expired, operations of

i) flushing of all HARQ buffers,
ii) releasing a configured physical uplink control channel (PUCCH),
iii) releasing a configured sounding reference signal (SRS),
iv) clearing configured downlink assignments and configured uplink grants,
v) clearing a physical uplink shared channel (PUSCH) resource for semi-persistent CSI reporting, and
vi) maintaining $N_{TA}$ of each TAG are performed by the UE.

24. A base station operating in a wireless communication system, the base station comprising:

one or more transceivers;
one or more processors; and
one or more memories operably connectable to the one or more processors, and storing instructions of configuring the one or more processors to perform operations based on being executed by the one or more processors,
wherein the operations include
transmitting, to a user equipment (UE), configuration information related to a timing advance group (TAG), wherein the configuration information includes information for a time alignment timer related to the TAG, wherein an operation related to a maintenance of an uplink timing alignment based on the time alignment timer is performed by the UE; and receiving, from the UE, an uplink channel/signal transmitted based on an uplink transmission timing for the TAG, wherein the TAG includes a first TAG and a second TAG belonging to a serving cell, wherein the configuration information includes information for i) a first time alignment timer related to the first TAG and ii) a second time alignment timer related to the second TAG, wherein each TAG is a primary TAG (PTAG) or a secondary TAG (STAG), and wherein based on the first time alignment timer and the second time alignment timer being expired, operations of

i) flushing of all HARQ buffers,
ii) releasing a configured physical uplink control channel (PUCCH),
iii) releasing a configured sounding reference signal (SRS),
iv) clearing configured downlink assignments and configured uplink grants,
v) clearing a physical uplink shared channel (PUSCH) resource for semi-persistent CSI reporting, and

vi) maintaining $N_{TA}$ of each TAG are performed by the UE.

【FIG. 1】

| | | | | | | | |
|---|---|---|---|---|---|---|---|

| R | Timing Advance Command | | Oct 1 |
|---|---|---|---|
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |

【FIG. 2】

| | | | | | | | |
|---|---|---|---|---|---|---|---|

| TAG ID | Timing Advance Command | Oct 1 |
|---|---|---|

【FIG. 3】

Start

Receive configuration information related to TAG ——S310

Perform operation related to maintenance of uplink time alignment ——S320

Transmit uplink channel/signal ——S330

End

【FIG. 4】

Start

Transmit configuration information related to TAG ——S410

Receive uplink channel/signal ——S420

End

【FIG. 5】

## INTERNATIONAL SEARCH REPORT

| International application No. |
|---|
| **PCT/KR2023/013965** |

| A. | CLASSIFICATION OF SUBJECT MATTER |
|---|---|

**H04W 56/00**(2009.01)i; **H04W 72/23**(2023.01)i; **H04W 72/04**(2009.01)i; **H04W 74/08**(2009.01)i

According to International Patent Classification (IPC) or to both national classification and IPC

| B. | FIELDS SEARCHED |
|---|---|

Minimum documentation searched (classification system followed by classification symbols)

H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이밍 어드밴스 그룹(timing advance group), 시간 정렬 타이머(time alignment timer), 만료(expiry), 상향링크(uplink), 랜덤 액세스 프리앰블(Random Access Preamble), CORESET pool index, PDCCH order, 타이밍 차이(timing difference)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021-243675 A1 (QUALCOMM INCORPORATED et al.) 09 December 2021 (2021-12-09)<br>See paragraphs [0032], [0051], [0080] and [0099]-[0100]; and claims 8 and 11. | 1,8-9,13-15,17-24 |
| Y | | 2-4,10-12 |
| A | | 5-7,16 |
| Y | NOKIA et al. Two TAs for UL multi-DCI multi-TRP operation. R1-2207545, 3GPP TSG RAN WG1 #110 Meeting. Toulouse (France). 12 August 2022.<br>See sections 2.4 and 2.5.2. | 2-4,11-12 |
| Y | WO 2011-069561 A1 (NOKIA CORPORATION et al.) 16 June 2011 (2011-06-16)<br>See page 10, lines 8-19. | 10 |
| A | MODERATOR (ERICSSON). Moderator Summary on Two TAs for multi-DCI. R1-2207800, 3GPP TSG-RAN WG1 Meeting #110. Toulouse, France. 28 August 2022.<br>See sections 2-5. | 1-24 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 January 2024** | **04 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/013965** |

**C.      DOCUMENTS CONSIDERED TO BE RELEVANT**

| Category* | Citation of document, with indication, where appropriate, of the relevant passages | Relevant to claim No. |
| --- | --- | --- |
| A | OPPO. Two TAs for multi-DCI. R1-2206264, 3GPP TSG RAN WG1 #110. Toulouse, France. 12 August 2022.<br>        See section 2. | 1-24 |

Form PCT/ISA/210 (second sheet) (July 2022)

### INTERNATIONAL SEARCH REPORT
Information on patent family members

International application No.

**PCT/KR2023/013965**

| Patent document cited in search report | Publication date (day/month/year) | Patent family member(s) | Publication date (day/month/year) |
|---|---|---|---|
| WO 2021-243675 A1 | 09 December 2021 | None | |
| WO 2011-069561 A1 | 16 June 2011 | None | |

Form PCT/ISA/210 (patent family annex) (July 2022)